# EUROPÄISCHE PATENTSCHRIFT

(11) **EP 0 534 075 B1**
(45) Veröffentlichungstag und Bekanntmachung des Hinweises auf die Patenterteilung: **28.06.1995**
(21) Anmeldenummer: 92112223.0
(22) Anmeldetag: 17.07.1992
(51) Int. Cl.: F16F 9/50

(54) **Hydraulischer regelbarer Schwingungsdämpfer**
Damping force regulation device for shock absorber
Amortisseur hydraulique réglable

(30) Priorität: 27.09.1991 DE 4132262
(43) Veröffentlichungstag der Anmeldung: 31.03.1993
(73) Patentinhaber: ITT Automotive Europe GmbH, 60488 Frankfurt (DE)
(72) Erfinder: Feigel, Hans-Jörg, W-6365 Rosbach v.d.H.2 (DE)

(56) Entgegenhaltungen:
- DE-A- 3 644 447
- DE-A- 3 901 256
- DE-C- 3 303 293

## Beschreibung

Die Erfindung betrifft einen hydraulischen regelbaren Schwingungsdämpfer für Kraftfahrzeuge mit einem Arbeitszylinder, dessen Innenraum mittels eines durch eine Kolbenstange verschiebbaren Kolbens in eine erste (kolbenstangenseitige) sowie eine zweite (kolbenseitige) Arbeitskammer unterteilt ist, einem koaxial zum Arbeitszylinder angeordneten Rohr, das zusammen mit dem Arbeitszylinder einen Verbindungkanal begrenzt, einem koaxial zum Arbeitszylinder bzw. dem Rohr angeordneten Außenrohr, das mit dem Rohr einen teilweise mit Öl gefüllten Ausgleichsraum begrenzt, der mit der ersten Arbeitskammer über den Verbindungskanal und mit der zweiten Arbeitskammer über ein Rückschlagventil in Verbindung steht, einem mit dem in der zweiten Arbeitskammer herrschenden Druck beaufschlagbaren Schaltventil, sowie einem steuerbaren Dämpferventil, das Änderungen der Dämpfungskraft ermöglicht, wobei Rückschlag- und Schaltventil eine Ventilbaugruppe bilden.

Ein derartiger Schwingungsdämpfer ist z.B. aus der DE-PS 33 03 293 bekannt. Die beiden Arbeitskammern des vorbekannten Schwingungsdämpfers sind mit dem Ausgleichsraum getrennt voneinander nur über ein Bodenventil verbindbar, das druckabhängig so steuerbar ist, daß es in der Druckstufe die erste Arbeitskammer und in der Zugstufe nur die zweite Arbeitskammer mit dem Ausgleichsraum verbindet, so daß in beiden Stufen stets die gesamte verdrängte Dämpfungsflüssigkeit den Dämpferkolben mit einer Dämpfungskraft-Einstellvorrichtung durchströmen muß. Um die durch eine veränderbare Öffnung gebildete Dämpfungskraft-Einstellvorrichtung zu betätigen, ist am oberen Ende der Kolbenstange ein Drehsolenoid vorgesehen, durch das eine innerhalb der Kolbenstange angeordnete, eine Scheibe tragende Steuerstange verdreht werden kann. Die Scheibe wirkt dabei mit der veränderbaren Öffnung zusammen, deren wirksamer Durchmesser geändert wird.

Weniger vorteilhaft anzusehen ist bei dem bekannten Schwingungsdämpfer vor allem der komplizierte Aufbau des zwei voreingestellte Dämpferventile aufweisenden Dämpferkolbens, dessen Herstellung mit erheblichem Aufwand verbunden ist. Als nachteilig werden auch sowohl das am Boden des Arbeitszylinders angeordnete, komplizierte, druckgesteuerte Schaltventil als auch die Art der Verstellung der Dämpfungskraft empfunden, die im Dämpferkolben stattfindet und durch Zusammenwirken mehrerer elektrischer sowie mechanischer Bauelemente erreicht wird.

Es ist daher Aufgabe der vorliegenden Erfindung, einen hydraulischen Schwingungsdämpfer mit verstellbarer Dämpfung der eingangs genannten Gattung anzugeben, der vom Aufbau her einfacher und somit kostengünstig herstellbar ist. Insbesondere soll die angestrebte Änderung der Dämpfungskraft in weitem Bereich durch Verwendung von einfachen, zuverlässig funktionierenden Bauteilen ermöglicht werden.

Diese Aufgabe wird erfindungsgemäß dadurch gelöst, daß das steuerbare Dämpferventil nur in einer Richtung durchströmbar wirkungsmäßig zwischen dem Verbindungskanal und dem Ausgleichsraum in der Ventilbaugruppe integriert ausgebildet ist, wobei das Schaltventil zwischen der zweiten Arbeitskammer und dem Verbindungskanal geschaltet ist. Durch diese erfinderischen Maßnahmen wird eine wesentliche Vereinfachung der Fertigung unter Verwendung des Baukasten-Prinzips erreicht. Eine so konstruierte Ventilbaugruppe ist komplett separat fertig- und prüfbar. Die einfache Ausführung des Dämpferkolbens ermöglicht einen problemlosen Einbau eines für die einwandfreie Funktion des Schwingungsdämpfers wichtigen Wegmeßsystems. Außerdem kann das unidirektional durchströmte Dämpferventil beispielsweise in Bezug auf Strömungskraftkompensation optimiert werden.

Zur Konkretisierung des Erfindungsgedankens wird bei einer vorteilhaften Weiterbildung des Erfindungsgegenstandes vorgeschlagen, daß die Ventilbaugruppe in einem im Bodenbereich des Arbeitszylinders vorgesehenen, Ventilgehäuse angeordnet ist, wobei das Rückschlagventil, das Schaltventil sowie das steuerbare Dämpferventil koaxial zueinander ausgebildet sind. Durch die kompakte Ausführung des Schwingungsdämpfers werden sämtliche bauraumbedingten Probleme bei seiner Integration in das Fahrwerk eliminiert.

Eine Verlängerung des Dämpferhubes wird bei einer weiteren bevorzugten Ausführungsform der Erfindung dadurch erreicht, daß die Ventilbaugruppe in einem im Bodenbereich des Arbeitszylinders vorgesehenen, vorzugsweise mit dem Außenrohr verschweißten Ventilgehäuse angeordnet ist, wobei das Rückschlagventil und das Schaltventil koaxial zueinander und das steuerbare Dämpferventil senkrecht zur Achse des Rückschlag- bzw. des Schaltventils angeordnet sind. Dadurch wird zusätzlich der Einfluß der Längsbeschleunigung des Dämpfers auf den Schließkörper des Dämpferventils erheblich reduziert.

Ein besonders einfacher Aufbau des erfindungsgemäßen Schwingungsdämpfers wird bei einer weiteren vorteilhaften Ausgestaltung der Erfindung dadurch erreicht, daß das Rückschlagventil und das Schaltventil koaxial zueinander am Boden des Arbeitszylinders ausgebildet sind, wobei das Schaltventil zwischen der zweiten Arbeitskammer und dem Verbindungskanal vorgesehen ist, während das steuerbare Dämpferventil nur in einer Richtung durchströmbar wirkungsmäßig zwischen dem Verbindungskanal und dem Ausgleichsraum geschaltet in einem vom Ventilgehäuse getrennten Dämpferventilgehäuse senkrecht zur Achse des Rückschlag- bzw. des Schaltventils angeordnet ist.

Bei einer weiteren Ausgestaltung des Erfindungsgegenstandes ist das steuerbare, nur in einer Richtung durchströmbare Dämpferventil wirkungsmäßig zwischen dem Verbindungskanal und dem Ausgleichsraum in der Ventilbaugruppe integriert, wobei der Ausgleichsraum an die Ventilbaugruppe anschließbar getrennt ausgebildet ist. Diese Lösung bietet sich insbesondere bei Fahrwerksystemen mit Niveauregelung an, da der Ausgleichsraum sonst zu viel Platz am Dämpfer benötigt. Außerdem wird dadurch ein "upside-down"-Einbau ermöglicht.

Eine andere vorteilhafte Ausgestaltung der Erfindung sieht vor, daß das Schaltventil bzw. das zweite Rückschlagventil durch eine mit in einem Ventilkörper ausgebildeten Durchlässen zusammenwirkende, federnd vorgespannte Ventilscheibe gebildet ist, während das erste Rückschlagventil als ein mit einem im Ventilkörper ausgebildeten Dichtsitz zusammenwirkender, federnd vorgespannter tellerförmiger Schließkörper ausgeführt ist. Dadurch wird erreicht, daß im Betrieb keine Kreuzung der Druckmittelwege erfolgt, so daß das Verhalten der Ventilbaugruppe bezüglich der Durchflußwiderstände als unkritisch bezeichnet werden kann.

Eine funktionsgünstige Vereinfachung bzw. Entzerrung des Bodenbereiches ist bei einer weiteren Ausführungsform dadurch erreicht, daß das Schaltventil bzw. das zweite Rückschlagventil durch eine koaxial zum Arbeitszylinder angeordnete, mit im Ventilgehäuse ausgebildeten Durchlässen zusammenwirkende, federnd vorgespannte Ventilscheibe gebildet ist, die radial außerhalb des Arbeitszylinders angeordnet ist. Diese Maßnahmen ermöglichen eine erleichterte Zuführung von zum Wegmeßsystem führenden Leitungen und schaffen günstige Voraussetzungen für die Realisierung einer wegabhängigen Dämpfungsfunktion im Bodenbereich.

Die vorhin erwähnte wegabhängige Dämpfung sowohl in der Zug- als auch in der Druckstufe wird bei einer vorteilhaften Weiterbildung des Erfindungsggenstandes dadurch erreicht, daß der Arbeitszylinder in den Hubendlagen des Kolbens Öffnungen aufweist, die ganz oder teilweise vom Kolben überfahren werden können, wobei die in der unteren Hubendlage des Kolbens ausgebildeten Öffnungen in einem Ringraum münden, der durch das zweite Rückschlagventil bzw. das Ventilgehäuse begrenzt wird. Die angesprochene Möglichkeit ist insbesondere bei modernen Fahrwerksregelungssystemen sehr wichtig, weil bei semiaktiver Regelung eine sehr "weiche" Einstellung üblich ist, die große Dämpferhübe bei hoher Geschwindigkeit zur Folge hat, so daß eine wirksame Dämpfung in den Endlagen zum Schutz der Komponenten beiträgt.

Eine weitere Hubvergrößerung wird nach einer weiteren ausgestaltung der Erfindung dadurch erreicht, daß das Rückschlagventil und das Schaltventil durch außerhalb des Arbeitszylinders in einem Ventilgehäuse im Abstand voneinander koaxial zum Arbeitszylinder angeordnete, federnd vorgespannte, mit in einem Ventilkörper ausgebildeten Durchlässen zusammenwirkende Ventilscheiben gebildet sind, während das steuerbare, nur in einer Richtung durchströmbare, wirkungsmäßig zwischen dem Verbindungskanal und dem Ausgleichsraum geschaltete Dämpferventil in einem Druckmittelkanäle aufweisenden bzw. begrenzenden, an das Ventilgehäuse seitlich anflanschbaren Dämpferventilgehäuse angeordnet ist, wobei der Arbeitszylinder in den Hubendlagen des Kolbens Öffnungen aufweist, die mit den Durchlässen in Wirkverbindung stehen. Durch diese Maßnahmen werden freie Zugangsmöglichkeiten durch den Boden des Arbeitszylinders geschaffen, die beispielsweise beim Einbau von Sensoren etc. ausgenutzt werden können. Außerdem ist eine leichte Austauschbarkeit des Dämpferventils gewährleistet, die insbesondere für Testzwecke und im Schadensfall sinnvoll ist.

Die Ventilscheiben sind dabei vorzugsweise mittels je einer am Ventilgehäuse bzw. dem Rohr sich abstützenden Spiralfeder vorgespannt. Der wesentliche Vorteil der Spiralfedern liegt darin, daß sich mit Ihnen geringe Federsteifigkeiten realisieren lassen, womit bei großen Durchflüssen nur leicht geringe Druckerhöhungen verbunden sind. Außerdem erlaubt die Anordnung die Verwendung von großen Spiralfedern ohne Einschränkung des Kolbenhubes.

Das Dämpferventil kann erfindungsgemäß entweder als ein Sitz- oder ein Schieberventil ausgeführt sein, dessen Schließkörper direkt oder als Hauptstufe mittelbar über eine Vorsteuerstufe durch einen elektromechanischen Wandler betätigbar ist.

Eine weitere vorteilhafte Ausführungsvariante sieht vor, daß das Ventilgehäuse zweiteilig ausgebildet ist und aus dem ersten Ventilkörper und einem Dämpferventilteil besteht, in dessen mittlerem, Schlitze bzw. Bohrungen sowie eine Zentralbohrung aufweisendem Bereich ein als Schließkörper des Dämpferventils dienender Schieber geführt ist, der vorzugsweise druckausgeglichen ausgeführt ist und mit einem auf dem Dämpferventilteil geführten, mit darin ausgebildeten Schlitzen bzw. Bohrungen zusammenwirkenden, druckunausgeglichenen zweiten Schieber gekoppelt ist.

Diese Maßnahmen bewirken insbesondere im Bereich kleiner Volumenströme eine Verbesserung der Funktion bzw. des Verhaltens des erfindungsgemäßen Schwingungsdämpfers bezüglich des gewünschten Federungskomforts, da mit dem beschriebenen Ventil neben einer einstellbaren Druckbegrenzungsfunktion auch die Drosselwirkung verstellt werden kann.

Eine andere vorteilhafte Ausführungsvariante der Erfindung sieht vor, daß das Ventilgehäuse zweiteilig ausgebildet ist und aus dem ersten Ventilkörper sowie einem Führungsteil besteht, wobei die Hauptstufe durch einen mit einer im Führungsteil ausgebildeten Steuerkante zusammenwirkenden Hauptschieber und die Vorsteuerstufe durch einen mit im Hauptschieber ausgebildeten Steuerbohrungen zusammenwirkenden Steuerschieber gebildet sind. Ein derart aufgebautes zweistufiges Dämpferventil braucht weniger Stelleistung bzw. ermöglicht ein besseres Beherrschen höherer Dämpfungskräfte.

Die Steuerkante ist dabei vorzugsweise im Bereich von im Führungsteil ausgebildeten, mit dem Ausgleichsraum in Verbindung stehenden Abströmbohrungen angeordnet, durch deren Größe und geometrische Form sich das Kennfeld der Hauptstufe beeinflussen läßt. Dabei ist es sinnvoll, wenn der Hauptschieber in seinem oberen Teil offen ausgebildet und mit Bohrungen versehen ist, die mit den Abströmbohrungen in Verbindung bringbar sind.

Gemäß einer weiteren bevorzugten Ausführungsform der Erfindung ist der Hauptschieber mittels einer ersten Druckfeder in Schließrichtung der Hauptstufe vorgespannt und liegt am ersten Ventilkörper an. Dadurch wird gewährleistet, daß die Hauptstufe bei Kolbenstillstand selbsttätig geschlossen wird.

Im Betrieb des erfindungsgemäßen Schwingungsdämpfers auftretende Ansaug- bzw. Verdrängungsprobleme an dem Hauptschieber werden vorzugsweise dadurch eliminiert, wenn die Anlage des Hauptschiebers am ersten Ventilkörper mittels axialer Vorsprünge erfolgt.

Eine weitere vorteilhafte Ausgestaltung der Erfindung sieht vor, daß der Hauptschieber mit Drosselbohrungen versehen ist, die einerseits im Bereich der Bohrungen und andererseits in einer durch den Hauptschieber im Führungsteil begrenzten hydraulischen Kammer münden. Durch diese Maßnahme werden sowohl eine einwandfreie Ölversorgung der Vorsteuerstufe als auch funktionswichtige Druckverluste bei Durchströmung der Drosselbohrungen erreicht.

Eine vorteilhafte Koppelung der Hauptstufe an die Vorsteuerstufe wird bei einer weiteren Ausgestaltung des Erfindungsgegenstandes dadurch erreicht, daß der Steuerschieber im Hauptschieber geführt ist und unter Vorspannung einer zweiten Druckfeder an diesem anliegen kann.

Eine besonders vorteilhafte Ausführung der Erfindung, deren Vorsteuerstufe durch eine mit einem Permanentmagneten zusammenwirkende Tauchspule elektromagnetisch betätigbar ist, besteht darin, daß der Steuerschieber am Tauchspulenträger mittels eines Fesselungselementes gefesselt ist, dessen Kopf am Hauptschieber anliegen kann. Durch diese Maßnahme wird eine exakte Steuerung der Dämpfungskraft im unteren Kolbengeschwindigkeitsbereich sowie eine Verstellbarkeit des Dämpferventils und damit Änderungen der Dämpfungskraft ermöglicht. Gleichzeitig wird ein Überschwingen des Steuerschiebers über die Steuerbohrungen verhindert. Besonders vorteilhaft ist dabei auch das günstige dynamische Verhalten der Tauchspule.

Gemäß einer weiteren bevorzugten Ausführungsvariante ist vorgesehen, daß der im wesentlichen aus Tauchspule und Permanentmagneten bestehende elektromechanische Wandler in einem mit dem Ausgleichsraum in Verbindung stehenden hydraulischen Raum angeordnet ist, so daß das am Tauchspulenträger befestigte Ende des Fesselungselementes der Wirkung des im Ausgleichsraum herrschenden Druckes ausgesetzt ist. Dadurch wird erreicht, daß die Tauchspule lediglich dem im Ausgleichsraum herrschenden Druck ausgesetzt ist, wobei gleichzeitig eine Wirkung einer nach unten gerichteten Kraft auf das Fesselungselement erzielt wird.

Um eine einfache Montage bzw. Justierung eines seitlich angeordneten Dämpferventils zu ermöglichen, ist das Rohr auf dem Arbeitszylinder axial verschiebbar und/bzw. verdrehbar angeordnet.

Eine Erkennung der Bewegungsrichtung des Dämpferkolbens bzw. Ermittlung der Relativgeschwindigkeit der Bewegung zwischen dem Arbeitszylinder und dem Dämpferkolben wird bei anderen bevorzugten Ausführungsvarianten der Erfindung dadurch ermöglicht, daß zwischen der zweiten Arbeitskammer und dem Ausgleichsraum ein Strömungsschalter geschaltet ist oder daß ein Wegsensor vorgesehen ist, der den Kolbenhub erfaßt.

Der Wegsensor kann beispielsweise aus einem in die Kolbenstange hineinragenden, im Kolben abgedichtet geführten, im Kolbenbereich aus der Kolbenstange teilweise herausragenden Rohr, vorzugsweise einem Aluminiumrohr, sowie einer innerhalb des Rohres beweglich angeordneten Seele bestehen, wobei das Rohr an seinem herausragenden Ende im Bereich der Ventilbaugruppe fixiert ist, während die Seele an der Kolbenstange befestigt ist.

Eine andere Ausführung des Wegsensors sieht vor, daß das Rohr innerhalb der Kolbenstange angeordnet ist, während die Seele im Rohr abgedichtet geführt ist und am Boden des Ventilgehäuses fixiert ist.

Eine Verbesserung bzw. Erhöhung der Ansprechempfindlichkeit des erfindungsgemäßen Schwingungsdämpfers wird bei einer Variante, bei der der Wegsensor in der hohlen Kolbenstange integriert ist, dadurch erreicht, daß die Kolbenstange Mittel aufweist, die eine Entlüftung ihres Innenraumes ermöglichen. Zu diesem Zweck begrenzt die Sensorseele beispielsweise im Rohr einen Raum, der über ein drittes Rückschlagventil mit in der ersten Arbeitskammer mündenden Entlüftungskanälen in Verbindung steht. Des weiteren ist es von Vorteil, wenn dem dritten Rückschlagventil ein Filter vorgeschaltet ist. Dabei ist es besonders sinnvoll, wenn das dritte Rückschlagventil sowie der Filter in einem die Kolbenstange verschließenden Gewindestopfen angeordnet sind.

Gemäß einer vorteilhaften Weiterbildung des Erfindungsgegenstandes ist die Seele im oberen Bereich rohrförmig ausgebildet und begrenzt mit dem Rohr einen mit der zweiten Arbeitskammer in Verbindung stehenden Ringraum, der mit dem Raum über ein viertes Rückschlagventil in Verbindung bringbar ist, das einen auf der Seele federnd vorgespannt geführten Ventilschieber gebildet wird, der mit in der Seele ausgebildeten Öffnungen zusammenwirkt.

Durch diese Maßnahmen wird ein undirektionaler Volumenstrom durch eine innerhalb der Kolbenstange ausgebildete Druckmittelverbindung erreicht. Das vierte Rückschlagventil wird selbstverständlich nur in der Druckstufe wirksam, während in der Zugstufe wegen des geschlossenen Rückschlagventils keine Rückbewegung der im Hydrauliköl ungelösten Luft erfolgen kann. Der in dem Aluminiumrohr begrenzte Raum kann mit dem Ringraum auch wahlweise über ein Druckbegrenzungsventil in Verbindung gebracht werden, das vorzugsweise durch einen in der Seele abgedichtet geführten, federnd vorgespannten Ventilkolben gebildet wird, der mit in der Seele ausgebildeten Öffnungen (Bohrungen) zusammenwirkt.

Um schließlich die in der Ventilbaugruppe auftretenden Druckverluste zu minimieren sieht eine bevorzugte Ausgestaltung des erfindungsgemäßen Schwingungsdämpfers vor, daß der Kolben ein fünftes Rückschlagventil aufweist, das bei einer Druckerhöhung in der zweiten Arbeitskammer eine Verbindung zwischen den beiden Arbeitskammern ermöglicht.

Weitere Einzelheiten, Merkmale und Vorteile der Erfindung gehen aus der nachfolgenden Beschreibung von insgesamt sieben Ausführungsbeispielen unter Bezugnahme auf die beiliegende Zeichnung. Es zeigen:
- Fig. 1: einen erfindungsgemäßen regelbaren Schwingungsdämpfer in schematischer Schnittdarstellung;
- Fig. 2: den Bodenbereich des Schwingungsdämpfers nach Fig. 1 mit der Ventilbaugruppe in größerem Maßstab;
- Fig. 3 bis Fig. 7: eine zweite bis siebte Ausführungsform der im Bodenbereich angeordneten Ventilbaugruppe;
- Fig. 8: eine zweite Konstruktionsvariante des erfindungsgemäßen Schwingungsdämpfers.

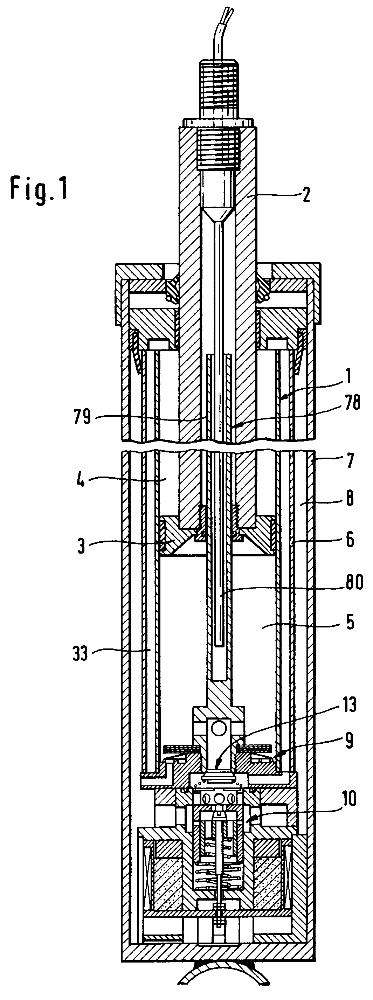

Der in Fig. 1 schematisch dargestellte regelbare Schwingungsdämpfer weist einen Arbeitszylinder 1 sowie ein zum Arbeitszylinder 1 koaxial angeordnetes Rohr 6 auf, so daß dazwischen ein Verbindungskanal 33 gebildet wird. Koaxial zum Arbeitszylinder 1 bzw. dem Rohr 6 ist weiter ein Außenrohr 7 angeordnet, das mit dem Rohr 6 einen teilweise mit Öl gefüllten, mit dem Verbindungskanal 33 zusammenwirkenden Ausgleichsraum 8 mit einem Kreisringquerschnitt begrenzt. Der Innenraum des Arbeitszylinders 1 ist mittels eines durch eine hohle Kolbenstange 2 verschiebbaren Kolbens 3 in eine oberhalb des Kolbens 3 ausgebildete erste Arbeitskammer 4 sowie eine unterhalb des Kolbens 3 ausgebildete zweite Arbeitskammer 5 unterteilt.

Im Bodenbereich des gezeigten Schwingungsdämpfers befindet sich eine näher nicht bezeichnete Ventilbaugruppe, die im wesentlichen aus einem in der Zugstufe wirksamen Rückschlagventil 9, einem in der Druckstufe wirksamen Schaltventil 13 sowie einem in seiner Gesamtheit mit dem Bezugszeichen 10 versehenen steuerbaren Dämpferventil besteht. Die Kolbenstange 2 nimmt dabei ein zweites Rohr 79 auf, das beispielsweise aus Aluminium hergestellt ist und dessen aus der Kolbenstange 2 herausragendes Ende im Bodenbereich fixiert ist. Das Aluminiumrohr 79 bildet mit einer darin beweglich angeordneten, an der Kolbenstange befestigten Seele 80 einen Wegsensor 78, der im Betrieb des erfindungsgemäßen Schwingungsdämpfers den Hub des Kolbens 3 erfaßt und somit seine Bewegungsrichtung bzw. -geschwindigkeit ermittelt.

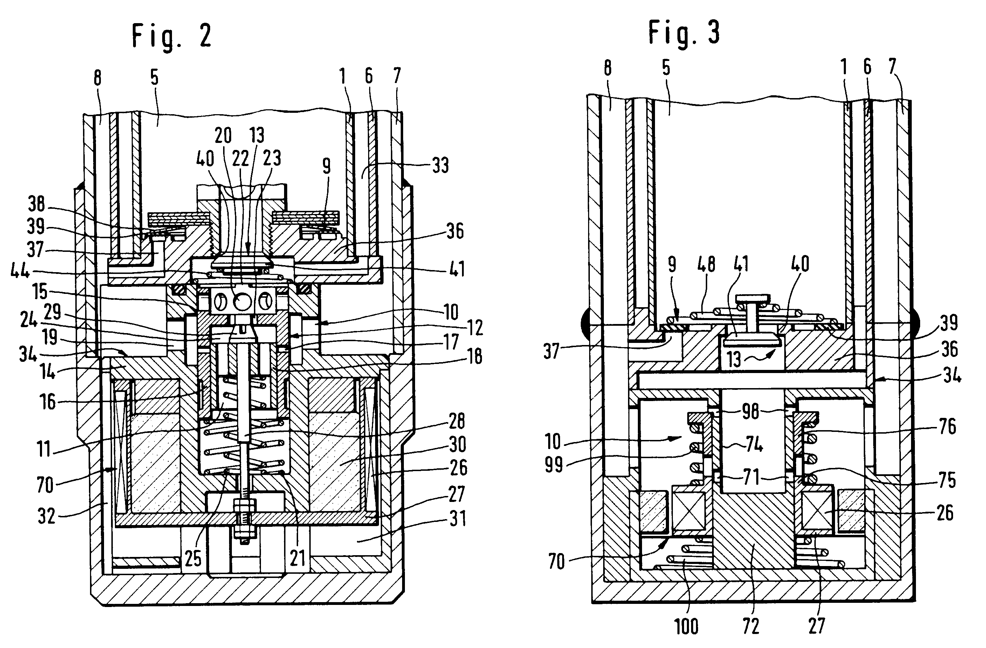

Wie insbesondere der Fig. 2 zu entnehmen ist, sind sowohl das Rückschlagventil 9 als auch das Schaltventil 13 in einem Ventilkörper 36 ausgebildet, der einen Teil eines die Ventilbaugruppe aufnehmenden Ventilgehäuses 34 bildet. Das Rückschlagventil 9 besteht dabei aus einer durch eine Feder 38 vorgespannten Ventilscheibe 39, die mit im Ventilkörper 36 vorgesehenen Durchlässen 37 zusammenwirkt und in der Zugstufe ein Nachsaugen des Öls aus dem Ausgleichsraum 8 in die zweite Arbeitskammer 5 ermöglicht. Das mit dem in der zweiten Arbeitskamer 5 herrschenden Druck beaufschlagbare Schaltventil 13 besteht aus einem durch eine zweite Feder 44 vorgespannten tellerförmigen Schließkörper 41, der mit einem im Ventilkörper 36 ausgebildeten Dichtsitz 40 zusammenwirkt, so daß ein zweites Rückschlagventil gebildet wird, das wirkungsmäßig zwischen der zweiten Arbeitskammer 5 und dem Verbindungskanal 33 geschaltet ist.

Das unterhalb des Ventilkörpers 36 angeordnete, als in einer Richtung durchströmbares zweistufiges Schieberventil ausgeführte Dämpferventil 10 dient zur Änderung des Durchflußquerschnitts der Verbindung zwischen dem Verbindungskanal 33 und dem Ausgleichsraum 8. Es besteht aus einem am Ventilkörper 36 anliegenden Führungsteil 14, das sowohl eine vorzugsweise durch einen elektromechanischen Wandler 70 betätigbare Vorsteuerstufe 11 als auch eine Hauptstufe 12 aufnimmt. Die Hauptstufe 12 weist dabei einen im Führungsteil 14 verschiebbar geführten Hauptschieber 16 auf, der mit einer im Führungsteil 14 ausgebildeten Steuerkante 15 zusammenwirkt. Die Steuerkante 15 befindet sich dabei im Bereich von mit dem Ausgleichsraum 8 in Verbindung stehenden Abströmbohrungen 19. In seinem oberen Teil ist der Hauptschieber 16 offen ausgebildet und mit mehreren an seinem Umfang regelmäßig verteilten radialen Bohrungen 20 versehen, die beim Öffnen der Hauptstufe 12 mit den Abströmbohrungen 19 in Verbindung gebracht werden. In seiner Ruhelage liegt der Hauptschieber 16 unter der Wirkung einer ersten Druckfeder 21 mittels axialer Vorsprünge 22 am Ventilkörper 36 an und begrenzt im Führungsteil 14 eine hydraulische Kammer 24, die über Drosselbohrungen 23 mit dem die Bohrungen 20 aufweisenden Bereich verbunden ist. Die hydraulische Kammer 24 wird nach unten durch einen im Hauptschieber 16 axial verschiebbar geführten Steuerschieber 18 begrenzt, der mit im Bereich der Abströmbohrungen 19 im Hauptschieber 16 ausgebildeten, radial verlaufenden Steuerbohrungen 17 zusammenwirkt und unter Vorspannung einer koaxial zur ersten Druckfeder 21 angeordneten zweiten Druckfeder 25 am Hauptschieber 16 anliegt. Der den Steuerschieber 18 betätigende elektromechanische Wandler 70 besteht aus einer Tauchspule 26 sowie einem Permanetmagneten 30. Am Tauchspulenträger 27 ist dabei ein Fesselungselement 28 befestigt, mit desen Hilfe der Steuerschieber 18 an der Tauchspule 26 gefesselt ist und das einen Kopf 29 aufweist, der im Ruhezustand von unten am Hauptschieber 16 anliegt. Unterhalb des elektromechanischen Wandlers 70 befindet sich ein mit Öl gefüllter hydraulischer Raum 31, der über seitlich axial verlaufende Kanäle 32 mit dem Ausgleichsraum 8 in Verbindung steht.

Um eine einwandfreie Funktion des erfindungsgemäßen Schwingungsdämpfers zu gewährleisten muß die Tauchspule 26 des elektromechanischen Wandlers 70 bestromt werden. Die entstehende elektromagnetische Stellkraft bewirkt eine Bewegung des Steuerschiebers 18 nach unten, so daß eine Verbindung zwischen dem Ausgleichsraum 8 und dem Verbindungskanal 33 hergestellt wird. Bewegt sich nun der Kolben 3 in der sogenannten Zugstufe nach oben, so wird der in der Arbeitskammer 4 herrschende Druck höher als der Druck in der unterhalb des Kolbes 3 liegenden Arbeitskammer 5, während das Schaltventil bzw. zweite Rückschlagventil 13 geschlossen bleibt. Dabei erfolgt ein Verdrängen des Öls aus der Arbeitskammer 4 über den Verbindungskanal 33 und das offene Dämpferventil 10 in den Ausgleichsraum 8, aus dem die zweite Arbeitskammer 5 über das offene erste Rückschlagventil 9 nachgefüllt wird.

Bei einer Bewegung des Kolbens 3 nach unten in der sogenannten Druckstufe wird der in der unterhalb des Kolbens 3 liegenden zweiten Arbeitskammer 5 herrschende Druck höher als der Druck in der oberen ersten Arbeitskammer 4, so daß das Schaltventil bzw. zweite Rückschlagventil 13 geöffnet wird. Der aus der zweiten Arbeitskammer 5 austretende Volumenstrom wird geteilt, und zwar in einen ersten Teilstrom, der über das offene zweite Rückschlagventil 13 und den Verbindungskanal 33 in die oberhalb des Kolbens 3 liegende erste Arbeitskammer 4 fließt, und einen zweiten Teilstrom, der über das offene Dämpferventil 10 in den Ausgleichsraum 8 strömt.

Im Betrieb des erfindungsgemäßen Schwingungsdämpfers wird zwischen zwei Betriebszuständen des Dämpferventils 10 unterschieden. Im ersten Betriebszustand, der einem unteren Kolbengeschwindigkeitsbereich entspricht, in dem niedrige Drücke und kleine Volumenströme auftreten, arbeitet das Dämpferventil 10 als einstufiges Schieberventil, dessen elektromagnetische Ansteuerung den Öffnungsgrad der Vorsteuerstufe 11 bestimmt.

Im zweiten Betriebszustand, der einem oberen Kolbengeschwindigkeitsbereich entspricht, in dem höhere Drücke und größere Volumenströme auftreten, wird der Steuerschieber 18 genauso wie im ersten Betriebszustand durch Bestromen der Tauchspule 26 positioniert, wobei seine Lage durch ein Gleichgewicht zwischen der Kraft der zweiten Druckfeder 25, der Stellkraft der Tauchspule 26, der aus der Druckdifferenz zwischen dem innerhalb des Hauptschiebers 16 herrschenden Druck und dem Ausgleichsraumdruck resultierenden, auf das Fesselungselement 28 wirkenden Kraft sowie den im Mündungsbereich der Steuerbohrungen 17 auftretenden hydrodynamischen Strömungskräften vorgegeben wird. Sind die Steuerbohrungen 17 geschlossen, so ist der innerhalb des Hauptschiebers 16 herrschende Druck gleich dem Systemdruck, so daß die Hauptstufe 12 durch die Kraft der ersten Druckfeder 21 geschlossen bleibt. Werden die Steuerbohrungen 17 freigegeben, so entsteht durch einen Ölstrom durch die Drosselbohrungen 23 am Hauptschieber 16 eine Druckdifferenz, deren Wirkung auf die Stirnfläche des Hauptschiebers 16 eine Kraft wirksam werden läßt, die die Federkraft der ersten Druckfeder 21 überwindet, so daß eine Bewegung des Hauptschiebers 16 nach unten erfolgt und die Steuerkante 15 bzw. die Abströmbohrungen 19 freigegeben werden. Die gerade erwähnte Bewegung des Hauptschiebers 16 hat ein teilweises Schließen der Steuerbohrungen 17 zur Folge, so daß der durch die Drosselbohrungen 23 fließende Volumenstrom abnimmt und die auf den Hauptschieber 16 einwirkende Druckdifferenz verringert wird. Dieser Regelprozeß dauert so lange, bis die Federkraft der ersten Druckfeder 21 die aus der Druckdifferenz resultierende Kraft überwindet und die Hauptstufe 12 schließt. Durch diesen Mechanismus ist die Lage der Hauptstufe 12 an die Lage der Vorsteuerstufe 11 hydraulisch gekoppelt, wobei die zur Bewegung des Hauptschiebers 16 benötigte Stellenergie der zu drosselnden Strömung entnommen wird. Im oberen Arbeitsbereich arbeitet das Dämpferventil 10 als zweistufiges Druckbegrenzungsventil, wobei die elektromagnetische Ansteuerung die Höhe des Differenzdruckes am Hauptschieber 16 bestimmt.

Durch die geeignete Dimensionierung der Bauteile kann die Art des kontinuierlichen Übergangs zwischen diesen Arbeitsbereichen gestaltet werden und es können nahezu beliebige Kennlinienscharen als Dämpferventilcharakteristik erzeugt werden. Insbesondere ist dadurch ein weiches Anlaufen der Ventilkennlinien im unteren Arbeitsbereich möglich, was bei Anwendung in steuerbaren Fahrzeugdämpfern einer komfortbetonten Dämpferstellung entspricht. Im oberen Arbeitsbereich wird die Degressivität der Kennlinien im Wesentlichen durch die Querschnittsfläche des Fesselungselementes 28 an dessen Durchtrittsstelle im Ventilgehäuse 14 bestimmt.

Bei der in Fig. 3 gezeigten zweiten Ausführungsvariante sind die Ventilscheibe 39 des ersten Rückschlagventils 9 sowie der tellerförmige Schließkörper 41 des Schaltventils 13 mittels einer einzigen dazwischen eingespannten Feder 48 vorgespannt. Das Ventilgehäuse 34 ist ähnlich wie bei der in Fig. 2 gezeigten Ausführung zweiteilig ausgebildet und besteht aus dem Ventilkörper 36 sowie einem Dämpferventilteil 72, dessen mittlerer Bereich zylindrisch ausgebildet und mit einer Zentralbohrung 74 versehen ist, deren Wand radiale Bohrungen 71,98 aufweist, die eine Verbindung zwischen der Zentralbohrung 74 und dem Ausgleichsraum 8 ermöglichen. Mit den im unteren Bereich der Zentralbohrung 74 ausgebildeten, Strömungsquerschnitte bildenden Bohrungen 71 wirkt ein vorzugsweise druckausgeglichener erster Schließkörper bzw. Schieber 75, der mittels einer Feder 99 mit einem mit den im oberen Bereich der Zentralbohrung 74 ausgebildeten Bohrungen 98 zusammenwirkenden druckunausgeglichenen zweiten Schieber 76 gekoppelt ist. Der erste Schieber 75 kann dabei vorzugsweise durch den Spulenträger 27 der im Zusammenhang mit Fig. 2 erwähnten Tauchspule 26 gebildet sein. Durch die Wirkung einer am ersten Schieber 75 sich abstützenden zweiten Feder 100 werden die Strömungsquerschnitte bzw. Bohrungen 71 im unbestromten Zustand des Wandlers 70 teilweise geschlossen gehalten, so daß bei einem Ausfall des elektromechanischen Wandlers 70 eine vorbestimmbare mittlere Drosselals auch eine vorbestimmbare mittlere Druckbegrenzungsfunktion gewährleistet sind.

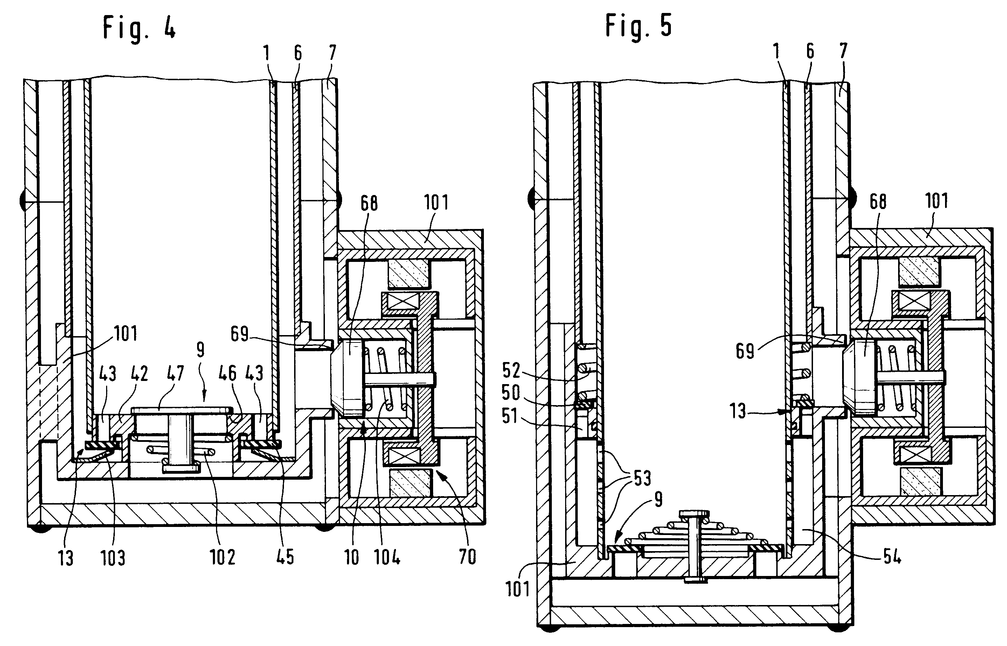

Bei der in Fig. 4 gezeigten dritten Ausführungsvariante ist die Ventilbaugruppe in einem vorzugsweise mit dem Außenrohr 7 verschweißten Ventilgehäuse 101 angeordnet. Das im Bodenbereich des Schwingungsdämpfers koaxial zum Schaltventil 13 angeordnete erste Rückschlagventil 9 wird durch einen tellerförmigen Schließkörper 47 gebildet, der mit einem im Ventilkörper 42 ausgebildeten Dichtsitz 46 zusammenwirkt, während das Schalt- bzw. zweite Rückschlagventil 13 als eine mit im Ventilkörper 42 ausgebildeten Durchlässen 43 zusammenwirkende Ventilscheibe 45 ausgeführt ist. Für die Vorspannung des Schließkörpers 47 bzw. der Ventilscheibe 45 sorgen je eine am Ventilkörper 42 bzw. am Ventilgehäuse 101 sich abstützende Feder (Spiral- bzw. Tellerfeder) 102,103.

Das bei der gezeigten Ausführung als Sitzventil ausgebildete Dämpferventil 10 ist seitlich, vorzugsweise senkrecht zur Achse der Rückschlagventile 9,13 angeordnet, wobei sein durch den vorhin erwähnten elektromechanischen Wandler 70 betätigbarer, mittels einer Druckfeder 104 vorgespannter Schließkörper 68 mit einem am Ventilgehäuse 101 ausgeformten Dichtsitz 69 zusammenwirkt.

Bei der in Fig. 5 dargestellten vierten Ausführungsform der Erfindung, deren Anordnung des Dämpferventils 10 der in Fig. 4 gezeigten entspricht, wird das Schalt- bzw. zweite Rückschlagventil 13 durch eine mittels einer Feder 52 vorgespannte, radial außerhalb des Arbeitszylinders 1 angeordnete Ventilscheibe 50 gebildet, die mit im Ventilgehäuse 101 ausgebildeten, axial verlaufenden Durchlässen 51 zusammenwirkt. Der Arbeitszylinder 1 ist in seinem unteren Bereich (in der unteren Hubendlage des Kolbens 3) mit Öffnungen 53 versehen, die ganz oder teilweise vom Kolben 3 überfahren werden können. Diese Bohrungen (Öffnungen) 53 münden in einem Ringraum 54, der radial (und axial von unten) durch das Ventilgehäuse 101 und axial vom zweiten Rückschlagventil 13 begrenzt ist.

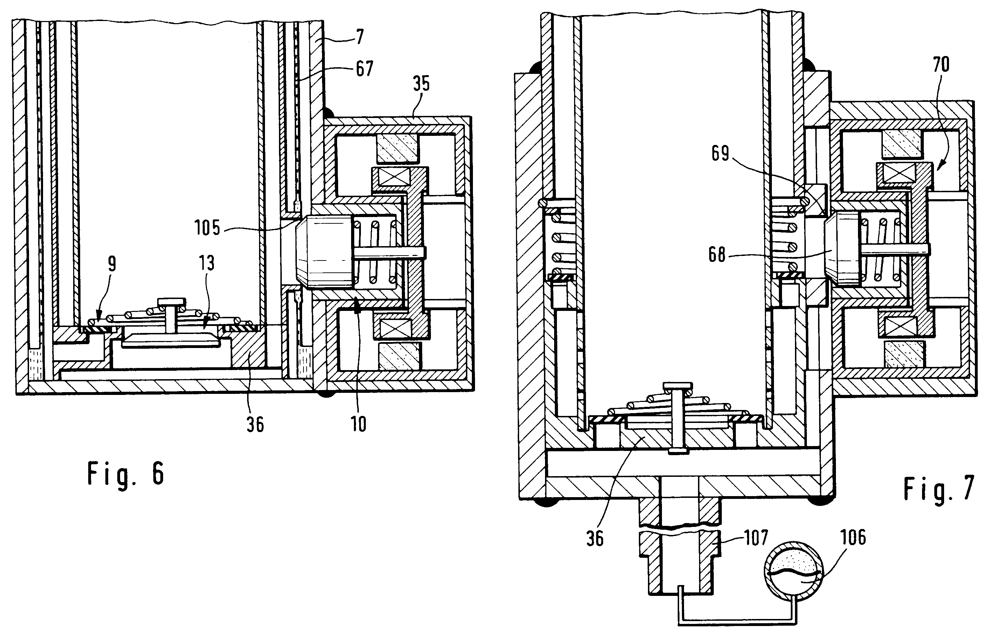

Die in Fig. 6 gezeigte fünfte Ausführungsform des erfindungsgemäßen Schwingungsdämpfers ist mit einer im Bodenbereich angeordneten zweiteiligen Ventilbaugruppe versehen, deren erster, durch die beiden Rückschlagventile 9,13 gebildeter Teil und. Ventilkörper 36 am Boden des Arbeitszylinders 1 angeordnet ist, während das Dämpferventil 10 in einem im unteren Bereich des Außenrohrs 7 befestigten Dämpferventilgehäuse 35 senkrecht zur Schwingungsdämpfer-Längsachse angeordnet ist. Der Dichtsitz 105 des als Sitzventil ausgeführten Dämpferventils 10 ist am Rohr 6 ausgebildet, wobei dem ersten Rückschlagventil 9 ein Filterelement 67 vorgeschaltet ist.

Die in Fig. 7 gezeigte Ausführungsform entspricht, was den Aufbau der Ventilbaugruppe bzw. die Anordnung der Ventile 9,10 und 13 betrifft, weitgehend der in Fig. 5 gezeigten Variante. Der wesentliche Unterschied besteht jedoch darin, daß der Ausgleichsraum 106 der in Fig. 7 dargestellten Ausführungsform getrennt vom Schwingungsdämpferkörper angeordnet und an die Ventilbaugruppe mittels eines im Boden des Ventilgehäuses 101 vorgesehenen hydraulischen Anschlusses 107 anschließbar ist.

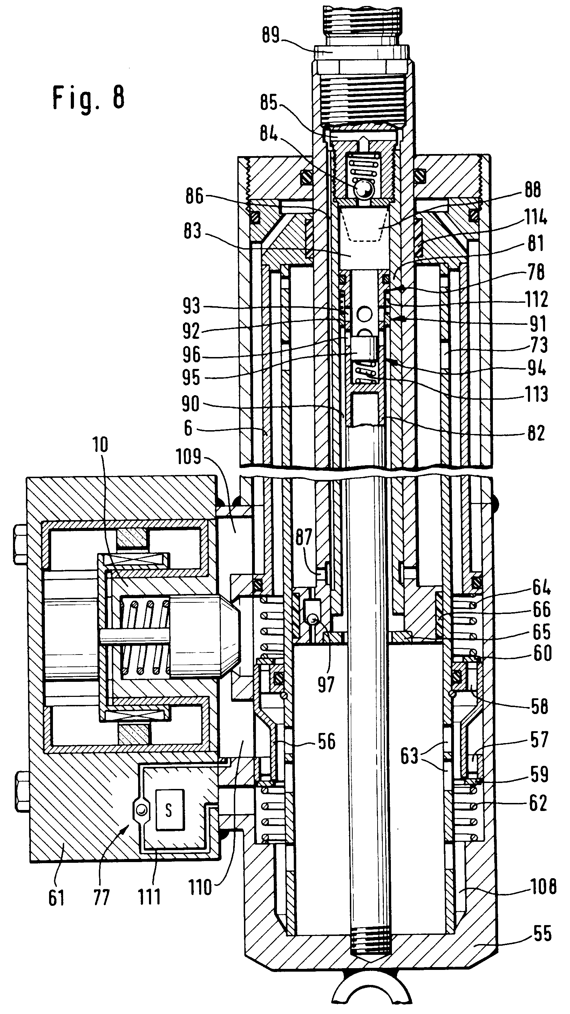

Bei der in Fig. 8 dargestellten zweiten Konstruktionsvariante nimmt das mit dem Außenrohr 7 verbundene, vorzugsweise verschweißte Ventilgehäuse 55 lediglich einen Ventilkörper 56 auf, dessen axiale Durchlässe 57,58 zusammen mit den Ventilscheiben 59,60 das erste 9 und das zweite Rückschlagventil 13 bilden. Die Ventilscheiben 59,60 sind dabei in Schließrichtung mittels je einer am Ventilgehäuse 55 bzw. am unteren Ende des Rohres 6 sich abstützenden Spiralfeder 62,64 vorgespannt. Das steuerbare Dämpferventil 10 ist bei der gezeigten Ausführung getrennt in einem an das Ventilgehäuse 55 anflanschbaren Dämpferventilgehäuse 61 angeordnet. Der Arbeitszylinder 1 weist in den beiden Kolbenhubendlagen Öffnungen 63,73 auf, wobei die im unteren Bereich des Arbeitszylinders 1 ausgebildeten Öffnungen 63 in einem die Rückschlagventile 9,13 aufnehmenden, durch das Ventilgehäuse 55 begrenzten Ringraum 108 münden, während die im oberen Bereich des Arbeitszylinders 1 ausgebildeten Bohrungen 73 den Innenraum des Arbeitszylinders 1 mit dem Verbindungskanal 33 verbinden. Das Dämpferventilgehäuse 35 weist Druckmittelkanäle 109,110 auf, die einerseits eine Verbindung zwischen dem Dämpferventil 10 und dem Ausgleichsraum 8 herstellen und andererseits einen Volumenstrom aus dem Ausgleichsraum 8 zum ersten Rückschlagventil 9 ermöglichen. Außerdem kann im Dämpferventilgehäuse 61 ein dritter Druckmittelkanal 111 ausgebildet sein, der eine Verbindung zwischen der zweiten Arbeitskammer 5 und dem Ausgleichsraum 8 ermöglicht und in dem ein Strömungsschalter 77 geschaltet sein kann, der die Bewegungsrichtung und/oder -geschwindigkeit des aus einer kreisförmigen, geschlossenen Platte 65 sowie einer Gleitdichtung 66 bestehenden Kolbens 3 sensiert.

Der im Zusammenhang mit Fig. 1 erwähnte Wegsensor 78 besteht bei der gezeigten Ausführungsvariante aus einem innerhalb der hohlen Kolbenstange 2 angeordneten Rohr 81, in dessen Innenraum eine Sensorseele 82 geführt ist, deren Ende im Boden des Ventilgehäuses 55 verankert ist. Die Seele 82 begrenzt im Rohr 81 vorzugsweise einen Raum 83, in dem sich mit der Zeit Luft ansammeln kann, so daß Maßnahmen vorzusehen sind, die seine Entlüftung ermöglichen. Zu diesem Zweck ist der Raum 83 über ein drittes Rückschlagventil 84 an Entlüftungskanäle 85,86,87 angeschlossen, wobei der erste Entlüftungskanal 85 durch eine Querbohrung in einem das dritte Rückschlagventil 84 aufnehmenden, die Kolbenstange 2 verschließenden Gewindestopfen 89, der zweite Entlüftungskanal 86 durch eine innen in die Wand der Kolbenstange 2 gestoßene Nut und der dritte Entlüftungskanal 87 durch eine in der Kolbenstange 2 ausgebildete, in die erste Arbeitskammer 4 mündende radiale Bohrung gebildet sind. Dabei ist es besonders sinnvoll, wenn dem dritten Rückschlagventil 84 ein Filter 88 vorgeschaltet ist. Die in ihrem oberen Bereich vorzugsweise rohrförmig ausgebildete Seele 82 begrenzt zusammen mit dem Rohr 81 einen mit der zweiten Arbeitskammer 5 in Verbindung stehenden Ringraum 90, der über ein viertes Rückschlagventil 91 mit dem vorhin erwähnten Raum 83 oberhalb der Sensorseele 82 verbindbar ist. Das vierte Rückschlagventil 91 wird durch einen mittels einer Feder 112 vorgespannten, auf der Seele 82 verschiebbar geführten Ventilschieber 92 gebildet, der mit in der Seele 82 ausgebildeten radialen Druchlässen bzw. Öffnungen 93 zusammenwirkt. Die gerade beschriebenen Entlüftungsmittel können im Bedarfsfall um ein Druckbegrenzungsventil 94 erweitert werden, das unter bestimmten Voraussetzungen eine Verbindung zwischen dem Raum 83 bzw. dem Inneren der rohrförmigen Sensorseele 82 und dem Ringraum 90 bzw. der zweiten Arbeitskammer 5 freigibt. Das Druckbegrenzungsventil 94 besteht im dargestellten Beispiel aus einem in der Seele 82 abgedichtet geführten, mittels einer zweiten Feder 113 vorgespannten Ventilkolben 95 sowie im rohrförmigen Teil der Sensorseele 82 ausgebildeten Öffnungen 96, die in Abhängigkeit von dem auf den Ventilkolben 95 wirkenden hydraulischen Druck freigegeben bzw. geschlossen werden.

Für die nachfolgende Funktionsbeschreibung wird angenommen, daß sich im Laufe der Zeit im Raum 83 vor dem dritten Rückschlagventil 84 Luft angesammelt hat. In der Druckstufe wird zunächst durch den in dem Raum 83 herrschenden Druck das dritte Rückschlagventil 84 geöffnet und das Luft-Öl-Gemisch hinter das dritte Rückschlagventil 84 in die Entlüftungskanäle 85,86,87 befördert. Die wirksamen Querschnitte sind so bemessen, daß keine deutliche Beeinflussung der Kennlinie erfolgt und keine Verschmutzungsgefahr besteht. Wird der in dem Raum 83 wirkende Druck deutlich größer als in der zweiten Arbeitskammer 5,so öffnet das Druckbegrenzungsventil 94. In der Zugstufe, in der das dritte Rückschlagventil 84 geschlossen ist und der Raum 83 über das vierte Rückschlagventil 91 befüllt wird, steigen die sich im Entlüftungskanal 86 befindlichen Luftblasen mittels Auftriebskraft sehr langsam hoch, bis sie in der darauffolgenden Druckstufe durch die Wirkung des hinter das dritte Rückschlagventil 84 geförderte Druckmittelvolumens in die erste Arbeitskammer 4 verdrängt werden, aus der sie durch die Kolbenstangenführung 114 gedrückt werden.

Im Rahmen des erfinderischen Gedankens ist es auch denkbar, ein fünftes Rückschlagventil 97 im Kolben 3 vorzusehen, das bei einer Druckerhöhung in der zweiten Arbeitskammer 5 öffnet und somit die in der Ventilbaugruppe auftretenden Druckverluste minimiert. Die wegabhängige Dämpfung im Bodenbereich geht allerdings dabei verloren.

### Bezugszeichenliste

- 1: Arbeitszylinder
- 2: Kolbenstange
- 3: Kolben
- 4: Arbeitskammer
- 5: Arbeitskammer
- 6: Rohr
- 7: Außenrohr
- 8: Ausgleichsraum
- 9: Rückschlagventil
- 10: Dämpfungsventil
- 11: Vorsteuerstufe
- 12: Hauptstufe
- 13: Schaltbentil
- 14: Führungsteil
- 15: Steuerkante
- 16: Hauptschieber
- 17: Steuerbohrung
- 18: Steuerschieber
- 19: Abströmbohrung
- 20: Bohrung
- 21: Druckfeder
- 22: Vorsprung
- 23: Drosselbohrung
- 24: Kammer
- 25: Druckfeder
- 26: Tauchspule
- 27: Spulenträger
- 28: Fesselungselement
- 29: Kopf
- 30: Permanentmagnet
- 31: Raum
- 32: Kanal
- 33: Verbindungskanal
- 34: Ventilgehäuse
- 35: Dämpfungsventilgehäuse
- 36: Ventilkörper
- 37: Durchlaß
- 38: Feder
- 39: Ventilscheibe
- 40: Dichtsitz
- 41: Schließkörper
- 42: Ventilkörper
- 43: Durchlaß
- 44: Feder
- 45: Ventilscheibe
- 46: Dichtsitz
- 47: Schließkörper
- 48: Feder
- 49:
- 50: Ventilscheibe
- 51: Durchlaß
- 52: Feder
- 53: Öffnung
- 54: Ringraum
- 55: Ventilgehäuse
- 56: Ventilkörper
- 57: Durchlaß
- 58: Durchlaß
- 59: Ventilscheibe
- 60: Ventilscheibe
- 61: Dämpferventilgehäuse
- 62: Spiralfeder
- 63: Öffnung
- 64: Spiralfeder
- 65: Platte
- 66: Gleitdichtung
- 67: Filterelement
- 68: Schließkörper
- 69: Dichtsitz
- 70: Wandler
- 71: Bohrung
- 72: Dämpferventilteil
- 73: Öffnung
- 74: Zentralbohrung
- 75: Schieber
- 76: Schieber
- 77: Strömungsschalter
- 78: Wegsensor
- 79: Rohr
- 80: Seele
- 81: Rohr
- 82: Seele
- 83: Raum
- 84: Rückschlagventil
- 85: Entlüftungskanal
- 86: Entlüftungskanal
- 87: Entlüftungskanal
- 88: Filter
- 89: Gewindestopfen
- 90: Ringraum
- 91: Rückschlagventil
- 92: Ventilschieber
- 93: Öffnung
- 94: Druckbegrennzungsventil
- 95: Ventilkolben
- 96: Öffnung
- 97: Rückschlagventil
- 98: Bohrung
- 99: Feder
- 100: Feder
- 101: Ventilgehäuse
- 102: Spiralfeder
- 103: Tellerfeder
- 104: Druckfeder
- 105: Dichtsitz
- 106: Ausgleichsraum
- 107: Anschluß
- 108: Ringraum
- 109: Druckmittelkanal
- 110: Druckmittelkanal
- 111: Druckmittelkanal
- 112: Feder
- 113: Feder
- 114: Kolbenstangenführung

## Patentansprüche

1. Hydraulischer regelbarer Schwingungsdämpfer für Kraftfahrzeuge mit einem Arbeitszylinder, dessen Innenraum mittels eines durch eine Kolbenstange verschiebbaren Kolbens in eine erste (kolbenstangenseitige) sowie eine zweite (kolbenseitige) Arbeitskammer unterteilt ist, einem vorzugsweise koaxial zum Arbeitszylinder angeordneten Rohr, das zusammen mit dem Arbeitszylinder einen Verbindungskanal begrenzt, einem vorzugsweise koaxial zum Arbeitszylinder bzw. dem Rohr angeordneten Außenrohr, das mit dem Rohr einen teilweise mit Öl gefüllten Ausgleichsraum begrenzt, der mit der ersten Arbeitskammer über den Verbindungskanal und mit der zweiten Arbeitskammer über ein Rückschlagventil in Verbindung steht, einem mit dem in der zweiten Arbeitskammer herrschenden Druck beaufschlagbaren Schaltventil, sowie einem steuerbaren Dämpferventil, das Änderungen der Dämpfungskraft ermöglicht, wobei Rückschlag- und Schaltventil eine Ventilbaugruppe bilden, dadurch **gekennzeichnet**, daß das steuerbare Dämpferventil (10) nur in einer Richtung durchströmbar wirkungsmäßig zwischen dem Verbindungskanal (33) und dem Ausgleichsraum (8) in der Ventilbaugruppe integriert ausgebildet ist, wobei das Schaltventil (13) zwischen der zweiten Arbeitskammer (5) und dem Verbindungskanal (33) geschaltet ist.

2. Schwingungsdämpfer nach Anspruch 1, dadurch **gekennzeichnet**, daß die Ventilbaugruppe in einem im Bodenbereich des Arbeitszylinders (1) vorgesehenen, vorzugsweise mit dem Außenrohr (7) verschweißten Ventilgehäuse (101) angeordnet ist, wobei das Rückschlagventil (9), das Schaltventil (13) sowie das steuerbare Dämpferventil (10) koaxial zueinander ausgebildet sind.

3. Schwingungsdämpfer nach Anspruch 1, dadurch **gekennzeichnet**, daß die Ventilbaugruppe in einem im Bodenbereich des Arbeitszylinders (1) vorgesehenen, vorzugsweise mit dem Außenrohr (7) verschweißten Ventilgehäuse (101) angeordnet ist, wobei das Rückschlagventil (9) und das Schaltventil (13) koaxial zueinander und das steuerbare Dämpferventil (10) senkrecht zur Achse des Rückschlag- (9) bzw. des Schaltventils (13) angeordnet sind.

4. Schwingungsdämpfer nach dem Oberbegriff des Anspruches 1, dadurch **gekennzeichnet**, daß das Rückschlagventil (9) und das Schaltventil (13) koaxial zueinander am Boden des Arbeitszylinders (1) ausgebildet sind, wobei das Schaltventil (13) zwischen der zweiten Arbeitskammer (5) und dem Verbindungskanal (33) vorgesehen ist, während das steuerbare Dämpferventil (10) nur in einer Richtung durchströmbar wirkungsmäßig zwischen dem Verbindungskanal (33) und dem Ausgleichsraum (8) geschaltet in einem Dämpferventilgehäuse (35) senkrecht zur Achse des Rückschlag(9) bzw. des Schaltventils (13) angeordnet ist.

5. Hydraulischer regelbarer Schwingungsdämpfer für Kraftfahrzeuge mit einem Arbeitszylinder, dessen Innenraum mittels eines durch eine Kolbenstange verschiebbaren Kolbens in eine erste (kolbenstangenseitige) sowie eine zweite (kolbenseitige) Arbeitskammer unterteilt ist, einem koaxial zum Arbeitszylinder angeordneten Rohr, das zusammen mit dem Arbeitszylinder einen Verbindungkanal begrenzt, sowie einem teilweise mit Öl gefüllten Ausgleichsraum, der mit der ersten Arbeitskammer über den Verbindungskanal und mit der zweiten Arbeitskammer über ein Rückschlagventil in Verbindung steht, einem mit dem in der zweiten Arbeitskammer herrschenden Druck beaufschlagbaren Schaltventil, sowie einem steuerbaren Ventil Dämpferventil, das Änderungen der Dämpfungskraft ermöglicht, wobei Rückschlag- und Schaltventil eine Ventilbaugruppe bilden, dadurch **gekennzeichnet**, daß das steuerbare Dämpferventil (10) nur in einer Richtung durchströmbar wirkungsmäßig zwischen dem Verbindungskanal (33) und dem Ausgleichsraum (106) in der Ventilbaugruppe integriert ist und der Ausgleichsraum (106) an die Ventilbaugruppe anschließbar getrennt ausgebildet ist.

6. Schwingungsdämpfer nach einem der Ansprüche 2 bis 5, dadurch **gekennzeichnet**, daß das Schaltventil (13) als Rückschlagventil ausgebildet ist, das bei einer Druckerhöhung in der zweiten Arbeitskammer (5) geöffnet wird.

7. Schwingungsdämpfer nach einem der Ansprüche 2 bis 5 und Anspruch 6, dadurch **gekennzeichnet**, daß das Rückschlagventil (9) durch eine mit in einem Ventilkörper (36) ausgebildeten Durchlässen (37) zusammenwirkende, federnd vorgespannte Ventilscheibe (39) gebildet ist, während das Schaltventil (13) als ein mit einem im Ventilkörper (36) ausgebildeten Dichtsitz (40) zusammenwirkender, federnd vorgespannter tellerförmiger Schließkörper (41) ausgeführt ist.

8. Schwingungsdämpfer nach einem der Ansprüche 2 und 5 und Anspruch 6, dadurch **gekennzeichnet**, daß das Schaltventil bzw. das zweite Rückschlagventil (13) durch eine mit in einem Ventilkörper (42) ausgebildeten Durchlässen (43) zusammenwirkende, federnd vorgespannte Ventilscheibe (45) gebildet ist, während das erste Rückschlagventil (9) als ein mit einem im Ventilkörper (42) ausgebildeten Dichtsitz (46) zusammenwirkender, federnd vorgespannter tellerförmiger Schließkörper (47) ausgeführt ist.

9. Schwingungsdämpfer nach Anspruch 7, dadurch **gekennzeichnet**, daß die Ventilscheibe (39) sowie der Schließkörper (41) mittels einer zwischen ihnen eingespannten Feder (48) vorgespannt sind.

10. Schwingungsdämpfer nach einem der Ansprüche 3 und 5 und Anspruch 6, dadurch **gekennzeichnet**, daß das Schaltventil bzw. das zweite Rückschlagventil (13) durch eine koaxial zum Arbeitszylinder (1) angeordnete, mit im Ventilgehäuse (101) ausgebildeten Durchlässen (51) zusammenwirkende, federnd vorgespannte Ventilscheibe (50) gebildet ist, die radial außerhalb des Arbeitszylinders (1) angeordnet ist.

11. Schwingungsdämpfer nach einem der Ansprüche 2 bis 5, dadurch **gekennzeichnet**, daß der Arbeitszylinder (1) in den Hubendlagen des Kolbens (3) Öffnungen (63,73) aufweist, die ganz oder teilweise vom Kolben (3) überfahren werden können.

12. Schwingungsdämpfer nach Anspruch 10 und 11, dadurch **gekennzeichnet**, daß die in der unteren Hubendlage des Kolbens (3) ausgebildeten Öffnungen (53) in einem Ringraum (54) münden, der durch das zweite Rückschlagventil (13) bzw. das Ventilgehäuse (101) begrenzt wird.

13. Schwingungsdämpfer nach dem Oberbegriff des Anspruches 1, dadurch **gekennzeichnet**, daß das Rückschlagventil (9) und das Schaltventil (13) durch außerhalb des Arbeitszylinders (1) in einem Ventilgehäuse (55) im Abstand voneinander koaxial zum Arbeitszylinder (1) angeordnete, federnd vorgespannte, mit in einem Ventilkörper (56) ausgebildeten Durchlässen (57,58) zusammenwirkende Ventilscheiben (59,60) gebildet sind, während das steuerbare, nur in einer Richtung durchströmbare, wirkungsmäßig zwischen dem Verbindungskanal (33) und dem Ausgleichsraum (8) geschaltete Dämpferventil (10) in einem Druckmittelkanäle (109,110,111) aufweisenden bzw. begrenzenden, an das Ventilgehäuse (55) seitlich anflanschbaren Dämpferventilgehäuse (61) angeordnet ist, wobei der Arbeitszylinder (1) in den Hubendlagen des Kolbens (3) Öffnungen (63,73) aufweist, die mit den Durchlässen (57,58) in Wirkverbindung stehen.

14. Schwingungsdämpfer nach Anspruch 12 und 13, dadurch **gekennzeichnet**, daß die Ventilscheiben (59,60) mittels je einer am Ventilgehäuse (55) bzw. dem Rohr (6) sich abstützenden Spiralfeder (62,64) vorgespannt sind.

15. Schwingungsdämpfer nach einem der vorhergehenden Ansprüche, dadurch **gekennzeichnet**, daß der Kolben (3) als eine kreisförmige geschlossene Platte (65) ausgebildet ist, die mit einer Gleitdichtung (66) versehen ist.

16. Schwingungsdämpfer nach einem der vorhergehenden Ansprüche, dadurch **gekennzeichnet**, daß dem ersten Rückschlagventil (9) ein Filterelement (67) vorgeschaltet ist.

17. Schwingungsdämpfer nach einem der vorhergehenden Ansprüche 1 bis 16, dadurch **gekennzeichnet**, daß das Dämpferventil (10) als ein Sitzventil ausgebildet ist.

18. Schwingungsdämpfer nach einem der vorhergehenden Ansprüche 1 bis 16, dadurch **gekennzeichnet**, daß das Dämpferventil (10) als ein Schieberventil ausgebildet ist.

19. Schwingungsdämpfer nach einem der vorhergehenden Ansprüche 17 bis 18, dadurch **gekennzeichnet**, daß der Schließkörper (16,68) des Dämpferventils (10) direkt oder als Hauptstufe (12) mittelbar über eine Vorsteuerstufe (11) durch einen elektromechanischen Wandler (70) betätigbar ist.

20. Schwingungsdämpfer nach Anspruch 19, dadurch **gekennzeichnet**, daß der elektromechanische Wandler (70) durch eine mit einem Permanentmagneten (30) zusammenwirkende Tauchspule (26) gebildet ist.

21. Schwingungsdämpfer nach Anspruch 3, dadurch **gekennzeichnet**, daß der Dichtsitz (69) des Dämpferventils (10) am Ventilgehäuse (101) ausgebildet ist.

22. Schwingungsdämpfer nach Anspruch 18, dadurch **gekennzeichnet**, daß das Ventilgehäuse (34) zweiteilig ausgebildet ist und aus dem ersten Ventilkörper (36) und einem Dämpferventilteil (72) besteht, in dessen mittlerem, Schlitze bzw. Bohrungen (71) sowie eine Zentralbohrung (74) aufweisendem Bereich ein als Schließkörper des Dämpferventils (10) dienender Schieber (75) geführt ist.

23. Schwingungsdämpfer nach Anspruch 22, dadurch **gekennzeichnet**, daß der Schieber (75) druckausgeglichen ausgeführt ist und mit einem auf dem Dämpferventilteil (72) geführten, mit darin ausgebildeten Schlitzen bzw. Bohrungen (98) zusammenwirkenden, druckunausgeglichenen zweiten Schieber (76) gekoppelt ist.

24. Schwingungsdämpfer nach Anspruch 23, dadurch **gekennzeichnet**, daß der erste Schieber (75) durch den Spulenträger der Tauchspule (26) gebildet wird.

25. Schwingungsdämpfer nach Anspruch 19, dadurch **gekennzeichnet**, daß das Ventilgehäuse (34) zweiteilig ausgebildet ist und aus dem ersten Ventilkörper (36) sowie einem Führungsteil (14) besteht, wobei die Hauptstufe (12) durch einen mit einer im Führungsteil (14) ausgebildeten Steuerkante (15) zusammenwirkenden Hauptschieber (16) und die Vorsteuerstufe (11) durch einen mit im Hauptschieber (16) ausgebildeten Steuerbohrungen (17) zusammenwirkenden Steuerschieber (18) gebildet sind.

26. Schwingungsdämpfer nach Anspruch 25, dadurch **gekennzeichnet**, daß die Steuerkante (15) im Bereich von im Führungsteil (14) ausgebildeten, mit dem Ausgleichsraum (8) in Verbindung stehenden Abströmbohrungen (19) angeordnet ist.

27. Schwingungsdämpfer nach Anspruch 26, dadurch **gekennzeichnet**, daß der Hauptschieber (16) in seinem oberen Teil offen ausgebildet und mit Bohrungen (20) versehen ist, die mit den Abströmbohrungen (19) in Verbindung bringbar sind.

28. Schwingungsdämpfer nach einem der Ansprüche 25 bis 27, dadurch **gekennzeichnet**, daß der Hauptschieber (16) mittels einer ersten Druckfeder (21) in Schließrichtung der Hauptstufe (12) vorgespannt ist und im Ruhezustand am ersten Ventilkörper (36) anliegt.

29. Schwingungsdämpfer nach Anspruch 28, dadurch **gekennzeichnet**, daß die Anlage des Hauptschiebers (16) am ersten Ventilkörper (36) mittels axialer Vorsprünge (22) erfolgt.

30. Schwingungsdämpfer nach einem der Ansprüche 25 bis 29, dadurch **gekennzeichnet**, daß der Hauptschieber (16) mit Drosselbohrungen (23) versehen ist, die einerseits im Bereich der Bohrungen (20) und andererseits in einer durch den Hauptschieber (16) im Führungsteil (14) begrenzten hydraulischen Kammer (24) münden.

31. Schwingungsdämpfer nach Anspruch 25, dadurch **gekennzeichnet**, daß der Steuerschieber (18) im Hauptschieber (16) geführt ist und im Ruhezustand unter Vorspannung einer zweiten Druckfeder (25) an diesem anliegt.

32. Schwingungsdämpfer nach Anspruch 20 und 25, dadurch **gekennzeichnet**, daß der Steuerschieber (18) am Tauchspulenträger (27) mittels eines Fesselungselementes (28) gefesselt ist, dessen Kopf (29) im Ruhezustand am Hauptschieber (16) anliegt.

33. Schwingungsdämpfer nach Anspruch 32, dadurch **gekennzeichnet**, daß der aus Tauchspule (26) und Permanentmagneten (30) bestehende elektromechanische Wandler (70) in einem mit dem Ausgleichsraum (8) in Verbindung stehenden hydraulischen Raum (31) angeordnet ist, so daß das am Tauchspulenträger (27) befestigte Ende des Fesselungselementes (28) der Wirkung des im Ausgleichsraum (8) herrschenden Druckes ausgesetzt ist.

34. Schwingungsdämpfer nach einem der vorhergehenden Ansprüche, dadurch **gekennzeichnet**, daß das Rohr (6) auf dem Arbeitszylinder (1) axial verschiebbar bzw. verdrehbar angeordnet ist.

35. Schwingungsdämpfer nach einem der vorhergehenden Ansprüche, dadurch **gekennzeichnet**, daß zwischen der zweiten Arbeitskammer (5) und dem Ausgleichsraum (8) ein Strömungsschalter (77) geschaltet ist.

36. Schwingungsdämpfer nach einem der vorhergehenden Ansprüche, dadurch **gekennzeichnet**, daß ein Wegsensor (78) vorgesehen ist, der den Kolbenhub erfaßt.

37. Schwingungsdämpfer nach Anspruch 36, dadurch **gekennzeichnet**, daß der Wegsensor (78) aus einem in die Kolbenstange (2) hineinragenden, im Kolben (3) abgedichtet geführten, im Kolbenbereich aus der Kolbenstange (2) teilweise herausragenden Rohr (79), vorzugsweise einem Aluminiumrohr, sowie einer innerhalb des Rohres (79) beweglich angeordneten Seele (80) besteht.

38. Schwingungsdämpfer nach Anspruch 37, dadurch **gekennzeichnet**, daß das Rohr (79) an seinem herausragenden Ende im Bereich der Ventilbaugruppe fixiert ist, während die Seele (80) an der Kolbenstange (2) befestigt ist.

39. Schwingungsdämpfer nach Anspruch 37, dadurch **gekennzeichnet**, daß das Rohr (81) innerhalb der Kolbensstange (2) angeordnet ist, während die Seele (82) im Rohr (81) abgedichtet geführt ist und am Boden des Ventilgehäuses (55) fixiert ist.

40. Schwingungsdämpfer nach Anspruch 37, dadurch **gekennzeichnet**, daß die Kolbenstange (2) Mittel aufweist, die eine Entlüftung ihres Innenraumes ermöglichen.

41. Schwingungsdämpfer nach Anspruch 39 und 40, dadurch **gekennzeichnet**, daß die Seele (82) im Rohr (81) einen Raum (83) begrenzt, der über ein drittes Rückschlagventil (84) mit in der ersten Arbeitskammer (4) mündenden Entlüftungskanälen (85,86,87) in Verbindung steht.

42. Schwingungsdämpfer nach Anspruch 41, dadurch **gekennzeichnet**, daß dem dritten Rückschlagventil (84) ein Filter (88) vorgeschaltet ist.

43. Schwingungsdämpfer nach Anspruch 42, dadurch **gekennzeichnet**, daß das dritte Rückschlagventil (84) sowie der Filter (88) in einem die Kolbenstange (2) verschließenden Gewindestopfen (89) angeordnet sind.

44. Schwingungsdämpfer nach Anspruch 41, dadurch **gekennzeichnet**, daß die Seele (82) im oberen Bereich rohrförmig ausgebildet ist und mit dem Rohr (81) einen mit der zweiten Arbeitskammer (5) in Verbindung stehenden Ringraum (90) begrenzt, der über ein viertes Rückschlagventil (91) mit dem Raum (83) in Verbindung bringbar ist.

45. Schwingungsdämpfer nach Anspruch 44, dadurch **gekennzeichnet**, daß das vierte Rückschlagventil (91) durch einen auf der Seele (82) federnd vorgespannt geführten Ventilschieber (92) gebildet wird, der mit in der Seele (82) ausgebildeten Öffnungen (92) zusammenwirkt.

46. Schwingungsdämpfer nach Anspruch 44, dadurch **gekennzeichnet**, daß der Raum (83) mit dem Ringraum (90) über ein Druckbegrenzungsventil (94) in Verbindung bringbar ist.

47. Schwingungsdämpfer nach Anspruch 46, dadurch **gekennzeichnet**, daß das Druckbegrenzungsventil (94) durch einen in der Seele (82) abgedichtet geführten, federnd vorgespannten Ventilkolben (95) gebildet wird, der mit in der Seele (82) ausgebildeten Öffnungen (Bohrungen) (96) zusammenwirkt.

48. Schwingungsdämpfer nach einem der vorhergehenden Ansprüche, dadurch **gekennzeichnet**, daß der Kolben (3) ein fünftes Rückschlagventil (97) aufweist, das bei einer Druckerhöhung in der zweiten Arbeitskammer (5) eine Verbindung zwischen den beiden Arbeitskammern (4,5) ermöglicht.

## Claims

1. A controllable hydraulic vibration absorber for automotive vehicles including a power cylinder whose interior space is subdivided by means of a piston, slidable by a piston rod, into a first (piston rod-side) and a second (piston-side) power chamber, a tube which is preferably positioned coaxially with the power cylinder and, along with the power cylinder, confines a connecting duct, with an external tube which is preferably positioned coaxially with the power cylinder or, respectively, the tube, and, along with the tube, confines a balancing chamber which is partly filled with oil and is in connection with the first power chamber through the connecting duct and in connection with the second power chamber through a non-return valve, a switching valve which is subjectible to the pressure existing within the second power chamber, and a controllable vibration absorber valve which permits variations of the vibration absorbing force, the non-return valve and the switching valve forming a valve assembly,
**characterized** in that the controllable vibration absorber valve (10) is configured such as to allow a flow through it in one direction only and such as to be integrated as to its action in the valve assembly between the connecting duct (33) and the balancing chamber (8), the switching valve (13) being inserted between the second power chamber (5) and the connecting duct (33).

2. A vibration absorber as claimed in claim 1,
**characterized** in that the valve assembly is accommodated within a valve housing (101) which is provided in the bottom range of the power cylinder (1) and is preferably welded to the external tube (7), the non-return valve (9), the switching valve (13) and the controllable vibration absorber valve (10) being arranged coaxially with respect to one another.

3. A vibration absorber as claimed in claim 1,
**characterized** in that the valve assembly is accommodated within a valve housing (101) which is provided in the bottom range of the power cylinder (1) and is preferably welded to the external tube (7), the non-return valve (9) and the switching valve (13) being positioned coaxially with each other, while the controllable vibration absorber valve (10) is positioned at right angles to the axis of the non-return valve (9), respectively the switching valve (13).

4. A vibration absorber as claimed in the preamble of patent claim 1,
**characterized** in that the non-return valve (9) and the switching valve (13) are arranged coaxially with each other at the bottom of the power cylinder (1), the switching valve (13) being provided between the second power chamber (5) and the connecting duct (33), while the controllable vibration absorber valve (10), allowing a flow through it in one direction only and inserted as to its action between the connecting duct (33) and the balancing chamber (8), is accommodated within a vibration absorber valve housing (35) at right angles to the axis of the non-return valve (9), respectively the switching valve (13).

5. A controllable hydraulic vibration absorber for automotive vehicles including a power cylinder whose interior space is subdivided by means of a piston, slidable by a piston rod, into a first (piston rod-side) and a second (piston-side) power chamber, a tube which is preferably positioned coaxially with the power cylinder and, along with the power cylinder, confines a connecting duct, with an external tube which is preferably positioned coaxially with the power cylinder or, respectively, the tube, and, along with the tube, confines a balancing chamber which is partly filled with oil and is in connection with the first power chamber through the connecting duct and in connection with the second power chamber through a non-return valve, a switching valve which is subjectible to the pressure existing within the second power chamber, and a controllable vibration absorber valve which permits variations of the vibration absorbing force, the non-return valve and the switching valve forming a valve assembly,
**characterized** in that the controllable vibration absorber valve (10), allowing a flow through it in one direction only, is integrated as to its action in the valve assembly between the connecting duct (33) and the balancing chamber (106), and in that the balancing chamber (106) is configured so as to be connectible to the valve assembly as a separate component.

6. A vibration absorber as claimed in anyone of claims 2 to 5,
**characterized** in that the switching valve (13) is configured as a non-return valve which is opened in the event of a pressure increase in the second power chamber (5).

7. A vibration absorber as claimed in anyone of claims 2 to 5 and in claim 6,
**characterized** in that the non-return valve (9) is formed by a valve disc (39) which interacts with passages (37) in a valve body (36) and which is elastically prestressed, while the switching valve (13) is provided as a disc-shaped closing element (41) which interacts with a sealing seat (40) provided in the valve body (36) and is elastically prestressed.

8. A vibration absorber as claimed in anyone of claims 2 to 5 and in claim 6,
**characterized** in that the switching valve, respectively the second non-return valve (13), is formed by a valve disc (45) which interacts with passages (43) in a valve body (42) and is elastically prestressed, while the first non-return valve (9) is provided as a closing element (47) which interacts with a sealing seat (46) in the valve body (42) and is elastically prestressed.

9. A vibration absorber as claimed in claim 7,
**characterized** in that the valve disc (39) and the valve body (41) are prestressed by means of a spring (48) interposed between them.

10. A vibration absorber as claimed in anyone of claims 3 to 5 and in claim 6,
**characterized** in that the switching valve, respectively the second non-return valve (13), is formed by a valve disc (50) which is arranged coaxially with the power cylinder (1), interacts with passages (51) in the valve housing (101), is elastically prestressed and positioned radially outside the power cylinder (1).

11. A vibration absorber as claimed in anyone of claims 2 to 5,
**characterized** in that, in the final stroke positions of the piston (3), the power cylinder (1) has openings (63, 73) which may completely or partly be passed over by the piston (3).

12. A vibration absorber as claimed in claims 10 and 11,
**characterized** in that the openings (53), configured in the lower final stroke position of the piston (3), open into in an annular chamber (54) which is confined by the second non-return valve (13) or, respectively, the valve housing (101).

13. A vibration absorber as claimed in the preamble of patent claim 1,
**characterized** in that the non-return valve (9) and the switching valve (13) are formed by valve discs (59, 60) which are positioned outside the power cylinder (1) within a valve housing (55) at a distance from each other, in coaxial relationship with the power cylinder (1), which are elastically prestressed and interact with passages (57, 58) in a valve body (56), while the controllable vibration absorber valve (10), allowing a flow through it in one direction only and inserted between the connecting duct (33) and the balancing chamber (8) in terms of effect, is positioned within a vibration absorber valve housing (61) which is furnished with or, respectively, confines hydraulic pressure fluid ducts (109, 110, 111) and is laterally flangeable to the valve housing (55), the power cylinder (1) having openings (63, 73) in the final stroke positions of the piston (3) which are operatively connected with the passages (57, 58).

14. A vibration absorber as claimed in claims 12 and 13,
**characterized** in that each of the valve discs (59, 60) is prestressed by means of one spiral spring (62, 64) which is supported at the valve housing (55) or, respectively, the tube (6).

15. A vibration absorber as claimed in anyone of the preceding claims,
**characterized** in that the piston (3) is arranged as a closed circular plate (65) which has a mechanical seal (66).

16. A vibration absorber as claimed in anyone of the preceding claims,
**characterized** in that the first non-return valve (9) is preceded by a filter element (67).

17. A vibration absorber as claimed in anyone of the preceding claims 1 to 16,
**characterterized** in that the vibration absorber valve (10) is arranged as a seat valve.

18. A vibration absorber as claimed in anyone of the preceding claims 1 to 16,
**characterized** in that the vibration absorber valve (10) is designed as a slide valve.

19. A vibration absorber as claimed in anyone of the preceding claims 17 to 18,
**characterized** in that the closing element (16, 68) of the vibration absorber valve (10) is actuatable either directly or as a main stage (12) indirectly through a pilot control stage (11) by way of an electromechanic transducer (70).

20. A vibration absorber as claimed in claim 19,
**characterized** in that the electromechanic transducer (70) is formed by a plunger coil (26) interacting with a permanent magnet (30).

21. A vibration absorber as claimed in claim 3,
**characterized** in that the sealing seat (69) of the vibration absorber valve (10) is configured at the valve housing (101).

22. A vibration absorber as claimed in claim 18,
**characterized** in that the valve housing (34) is formed of two parts and is composed of the first valve body (36) and a vibration absorber valve part (72) in whose central range having slots or bores (71) and a central bore (74), a slide (75) which serves as a closing element of the vibration absorber valve (10) is guided.

23. A vibration absorber as claimed in claim 22,
**characterized** in that the slide (75) is designed to be pressure-balanced and is coupled to a second, pressure-unbalanced slide (76) which is guided on the vibration absorber valve part (72) and interacts with slots or, respectively, bores (98), provided in the vibration absorber valve part.

24. A vibration absorber as claimed in claim 23,
**characterized** in that the first slide (75) is formed by the coil support of the plunger coil (26).

25. A vibration absorber as claimed in claim 19,
**characterized** in that the valve housing (34) is formed of two parts and is composed of the first valve body (36) and a guide element (14), the main stage (12) being formed by a main slide (16) interacting with a control edge (15) which is arranged in the guide element (14), while the pilot control stage (11) is formed by a control slide (18) interacting with control bores (17) provided in the main slide (16).

26. A vibration absorber as claimed in claim 25,
**characterized** in that the control edge (15) is positioned proximate flow-off bores (19) which are arranged in the guide element (14) and are connected with the balancing chamber (8).

27. A vibration absorber as claimed in claim 26,
**characterized** in that the main slide (16) is configured to be open in its upper part and is furnished with bores (20) which may be connected with the flow-off bores (19).

28. A vibration absorber as claimed in anyone of claims 25 to 27,
**characterized** in that the main slide (16) is prestressed by means of a first compression spring (21) in the closing direction of the main stage (12) and abuts against the first valve body (36) in the condition of rest.

29. A vibration absorber as claimed in claim 28,
**characterized** in that the main slide (16) abuts against the first valve body (36) by means of axial projections (22).

30. A vibration absorber as claimed in anyone of claims 25 to 29,
**characterized** in that the main slide (16) has restricting bores (23) which, on the one side, open into the bores (20) and, on the other side, into a hydraulic chamber (24) which is confined by the main slide (16) in the guide element (14).

31. A vibration absorber as claimed in claim 25,
**characterized** in that the control slide (18) is guided in the main slide (16) and abuts against the main slide in the condition of rest under the prestressing action of a second compression spring (25).

32. A vibration absorber as claimed in claims 20 and 25,
**characterized** in that the control slide (18) is captivated to the plunger coil support (27) by means of a captivating element (28) whose head (29) abuts against the main slide (16) in the condition of rest.

33. A vibration absorber as claimed in claim 32,
**characterized** in that the electromechanic transducer (70), composed of the plunger coil (26) and the permanent magnet (30), is accommodated in a hydraulic chamber (31) which is connected with the balancing chamber (8), so that the end of the captivating element (28) which is fixed to the plunger coil support (27) is subjected to the effect of the pressure prevailing in the balancing chamber (8).

34. A vibration absorber as claimed in anyone of the preceding claims,
**characterized** in that the tube (6) is axially slidingly, respectively rotatably positioned on the power cylinder (1).

35. A vibration absorber as claimed in anyone of the preceding claims,
**characterized** in that a flow switch (77) is inserted between the second power chamber (5) and the balancing chamber (88).

36. A vibration absorber as claimed in anyone of the preceding claims,
**characterized** in that a travel sensor (78) is provided which senses the piston stroke.

37. A vibration absorber as claimed in claim 36,
**characterized** in that the travel sensor (78) is constituted by a pipe (79), preferably an aluminium pipe, which projects into the piston rod (2), is sealedly guided within the piston (3) and partly projects out of the piston rod (2) in the piston range, and by a core (80) which is movably positioned within the pipe (79).

38. A vibration absorber as claimed in claim 37,
**characterized** in that, at its end jutting out, the pipe (79) is fixed proximate the valve assembly, while the core (80) is fixed to the piston rod (2).

39. A vibration absorber as claimed in claim 37,
**characterized** in that the pipe (81) is positioned within the piston rod (2), while the core (82) is sealedly guided within the pipe (81) and is fixed to the bottom of the valve housing (55).

40. A vibration absorber as claimed in claim 37,
**characterized** in that the piston rod (2) has a means which affords ventilation of its interior space.

41. A vibration absorber as claimed in claims 39 and 40,
**characterized** in that the core (82) confines a chamber (83) within the pipe (81) which is connected through a third non-return valve (84) with vent ducts (85, 86, 87) opening into the first power chamber (4).

42. A vibration absorber as claimed in claim 41,
**characterized** in that the third non-return valve (84) is preceded by a filter (88).

43. A vibration absorber as claimed in claim 42,
**characterized** in that the third non-return valve (84) and the filter (88) are accommodated within a threaded plug (89) which shuts off the piston rod (2).

44. A vibration absorber as claimed in claim 41,
**characterized** in that, in its upper range, the core (82) is of tubular shape and, along with the pipe (81), confines an annular chamber (90) which is connected with the second power chamber (5) and may be connected with the chamber (83) through a fourth non-return valve (91).

45. A vibration absorber as claimed in claim 44,
**characterized** in that the fourth non-return valve (91) is formed by a valve slide (92) which is guided in an elastically prestressed way on the core (82) and interacts with openings (92) in the core (82).

46. A vibration absorber as claimed in claim 44,
**characterized** in that the chamber (83) may be connected with the annular chamber (90) through a pressure-limiting valve (94).

47. A vibration absorber as claimed in claim 46,
**characterized** in that the pressure-limiting valve (94) is constituted by a valve piston (95) which is sealedly guided within the core (82), is elastically prestressed and interacts with openings (bores) (96) arranged in the core (82).

48. A vibration absorber as claimed in anyone of the preceding claims,
**characterized** in that the piston (3) has a fifth non-return valve (97) which provides a connection between the two power chambers (4, 5) upon pressure increase in the second power chamber (5).

## Revendications

1. Amortisseur hydraulique de suspension de type réglable, pour véhicule automobile, comprenant un cylinde de travail, dont la cavité est divisée, au moyen d'un piston agencé de façon à pouvoir être déplacé en translation au moyen d'une tige de piston, en une première chambre de travail (du côté de la tige de piston) et une seconde chambre de travail (du côté du pîston), un tube, qui est disposé de préférence avec le même axe que le cylindre de travail et qui délimite avec le cylindre de travail un conduit de liaison, un tube extérieur, qui est disposé de préférence avec le même axe que le cylindre de travail et le tube et qui délimite avec le tube une chambre d'équilibrage qui est partiellement remplie d'huile et qui communique avec la première chambre de travail par le conduit de liaison et avec la seconde chambre de travail par l'intermédiaire d'une valve antiretour, une valve de commutation, agencée de façon à pouvoir être soumise à l'action de la pression régnant dans la seconde chambre de travail, et une valve d'amortisseur qui est agencée de façon à pouvoir être commandée et qui permet des variations de la force d'amortissement, la valve antiretour et la valve de commutation formant un groupe structurel de valves, caractérisé en ce que la valve d'amortisseur (10) réglable est réalisée de façon à ne pouvoir être traversée que dans un seul sens et en étant intégrée dans la groupe structurel de valves de manière à pouvoir exercer son action entre le conduit de liaison (33) et la chambre d'équilibrage (8), tandis que la valve de commutation (13) est interposée entre la seconde chambre de travail (5) et le conduit de liaison (33).

2. Amortisseur de suspension selon la revendication 1, caractérisé en ce que le groupe structurel de valves est disposé dans un boîtier de valves (101) qui est prévu dans la zone du fond du cylindre de travail (1) et qui est de préférence soudé au tube extérieur (7), tandis que la valve antiretour (9), la valve de commutation (13) et la valve d'amortisseur commandée (10) sont réalisées de façon à avoir toutes deux le même axe.

3. Amortisseur de suspension selon la revendication 1, caractérisé en ce que le groupe structurel de valves est disposé dans un boîtier de valves (101) qui est prévu dans la zone du fond du cylindre de travail (1) et qui est de préférence soudé sur le tube extérieur (7), tandis que la valve antiretour (9) et la valve de commutation (13) sont disposées de façon à avoir le même axe et que la valve d'amortisseur commandée (10) est disposée perpendiculairement à l'axe de la valve antiretour (9) et de la valve de commutation (13).

4. Amortisseur de suspension selon le préambule de la revendication 1, caractérisé en ce que la valve antiretour (9) et la valve de commutation (13) sont réalisées au fond du cylindre de travail (1) de façon à avoir toutes deux le même axe, la valve de commutation (13) étant prévue entre la seconde chambre de travail (5) et le conduit de liaison (33), tandis que la valve d'amortisseur commandée (10), qui est agencée de façon à ne pouvoir être traversée que dans un seul sens, est disposée dans un boîtier de valve d'amortisseur (35) en étant perpendiculaire à l'axe de la valve antiretour (9) et de la valve de commutation (13) et en étant interposée de façon à pouvoir exercer son action entre le conduit de liaison (33) et la chambre d'équilibrage (8).

5. Amortisseur hydraulique de suspension de type réglable, pour véhicule automobile, comprenant un cylinde de travail, dont la cavité est divisée, au moyen d'un piston agencé de façon à pouvoir être déplacé en translation au moyen d'une tige de piston, en une première chambre de travail (du côté de la tige de piston) et une seconde chambre de travail (du côté du pîston), un tube, qui est disposé de préférence avec le même axe que le cylindre de travail et qui délimite avec le cylindre de travail un conduit de liaison, un tube extérieur, qui est disposé de préférence avec le même axe que le cylindre de travail et le tube et qui délimite avec le tube une chambre d'équilibrage qui est partiellement remplie d'huile et qui communique avec la première chambre de travail par le conduit de liaison et avec la seconde chambre de travail par l'intermédiaire d'une valve antiretour, une valve de commutation, agencée de façon à pouvoir être soumise à l'action de la pression régnant dans la seconde chambre de travail, et une valve d'amortisseur qui est agencée de façon à pouvoir être commandée et qui permet des variations de la force d'amortissement, la valve antiretour et la valve de commutation formant un groupe structurel de valves, caractérisé en ce que la valve d'amortisseur commandée (10), qui est agencée de façon à ne pouvoir être traversée que dans un seul sens, est intégrée dans le groupe structurel de valves de façon à pouvoir exercer son action entre le conduit de liaison (33) et la chambre d'équilibrage (106), la chambre d'équilibrage (106) est réalisée d'une manière séparée en pouvant être raccordée au groupe structurel de valves.

6. Amortisseur de suspension selon l'une des revendications 2 à 5, caractérisé en ce que la valve de commutation (13) est réalisée sous la forme d'une valve antiretour qui s'ouvre lorsque la pression augmente dans la seconde chambre de travail (5).

7. Amortisseur de suspension selon l'une des revendications 2 à 5 et la revendication 6, caractérisé en ce que la valve antiretour (9) est formée d'un disque de valve (39) soumis à une précontrainte élastique et coopérant avec des passages (37) ménagés dans un corps de valve (36), tandis que la valve de commutation (13) est réalisée sous la forme d'un obturateur en plateau (41) soumis à une précontrainte élastique et coopérant avec un siège d'étanchéité (40) réalisé dans le corps de valve (36).

8. Amortisseur de suspension selon l'une des revendications 2 à 5 et la revendication 6, caractérisé en ce que la valve de commutation ou seconde valve antiretour (13) est formée d'un disque de valve (45) qui est soumis à une précontrainte élastique et qui coopère avec des passages (43) ménagés dans un corps de valve (42), tandis que la première valve antiretour (9) est réalisée sous la forme d'un obturateur en plateau (47) soumis à une précontrainte élastique et coopérant avec un siège d'étanchéité (46) ménagé dans le corps de valve (42), et est disposé radialement à l'extérieur du cylindre de travail.

9. Amortisseur de suspension selon la revendication 7, caractérisé en ce que le disque de valve (39) et l'obturateur (41) sont soumis à une précontrainte au moyen d'un ressort (48) mis sous tension entre ce disque et cet obturateur.

10. Amortisseur de suspension selon l'une des revendications 3 et 5 et la revendication 6, caractérisé en ce que la valve de commutation ou seconde valve antiretour (13) est formée d'un disque de valve (50) qui est disposé avec le même axe que le cylindre de travail (1) et est situé radialement à l'extérieur du cylindre de travail (1) et qui est soumis à une précontrainte élastique et coopère avec des passages (51) ménagés dans le boîtier de valve (101).

11. Amortisseur de suspension selon l'une des revendications 2 à 5, caractérisé en ce que le cylindre de travail (1) comporte, dans les positions d'extrémité de course du piston (3), des ouvertures (63, 73) devant lesquelles le piston (3) peut passer en les couvrant totalement ou partiellement.

12. Amortisseur de suspension selon la revendication 10 et 11, caractérisé en ce que les ouvertures (53) ménagées dans la position d'extrémité de course inférieure du piston (3) débouchent dans une chambre annulaire (54) qui est délimitée par la seconde valve antiretour (13) ou le boîtier de valve (101).

13. Amortisseur de suspension selon le préambule de la revendication 1, caractérisé en ce que la valve antiretour (9) et la valve de commutation (13) sont formées par des disques de valve (59, 60), soumis à une précontrainte élastique, qui sont disposés, à distance l'un de l'autre et avec le même axe que le cylindre de travail (1), à l'extérieur de ce cylindre de travail et dans un boîtier de valve (55) et qui coopèrent avec des passages (57, 58) ménagés dans un corps de valve (56), tandis que la valve d'amortisseur commandée (10), qui est agencée de façon à ne pouvoir être traversée que dans un seul sens et qui est interposée de façon à pouvoir exercer son action entre le conduit de liaison (33) et la chambre d'équilibrage (8), est disposée dans un boîtier de valve d'amortisseur (61) qui comprend ou délimite des conduits d'agent de pression (109, 110, 111) et est agencé de façon à pouvoir être fixé à la façon d'une fixation par bride sur le côté du boîtier de valve (55), le cylindre de travail (1) comportant, dans les positions d'extrémité de course du piston (3), des ouvertures (63, 73) qui communiquent avec les passages (57, 58) de façon à coopérer avec ces passages.

14. Amortisseur de suspension selon la revendication 12 et 13, caractérisé en ce que les disques de valve (59, 60) sont soumis à une précontrainte chacun au moyen d'un ressort hélicoïdal (62, 64) qui prend appui respectivement sur le boîtier de valve (55) ou sur le tube (6).

15. Amortisseur de suspension selon l'une des revendications précédentes, caractérisé en ce que le piston (3) est réalisé sous la forme d'une plaque circulaire fermée (65) qui est pourvue d'une garniture de glissement (66).

16. Amortisseur de suspension selon l'une des revendications précédentes, caractérisé en ce qu'un élément de filtre (67) est disposé en amont de la première valve antiretour (9).

17. Amortisseur de suspension selon l'une des revendications précédentes 1 à 16, caractérisé en ce que la valve d'amortisseur (10) est réalisée sous la forme d'une valve à siège.

18. Amortisseur de suspension selon l'une des revendications précédentes 1 à 16, caractérisé en ce que la valve d'amortisseur (10) est réalisée sous la forme d'une valve à tiroir.

19. Amortisseur de suspension selon l'une des revenndications précédentes 17 et 18, caractérisé en ce que l'obturateur (16, 68) de la valve d'amortisseur (10) est agencé de façon à pouvoir être actionné directement ou indirectement, sous la forme d'un étage principal et par l'intermédiaire d'un étage pilote, par un convertisseur électromagnétique (70).

20. Amortisseur de suspension selon la revendication 19, caractérisé en ce que le convertisseur électromagnétique (70) est formé d'une bobine mobile (26) coopérant avec un aimant permanent (30).

21. Amortisseur de suspension selon la revendication 3, caractérisé en ce que le siège d'étanchéité (69) de la valve d'amortisseur (10) est réalisé sur le boîtier de valve (101).

22. Amortisseur de suspension selon la revendication 18, caractérisé en ce que le boîtier de valve (34) est réalisé en deux parties et est formé du premier corps de valve (36) et d'une partie de valve d'amortisseur (72) et en ce qu'un tiroir (75) servant d'obturateur pour la valve d'amortisseur (10) est guidé dans la zone centrale de cette partie de valve d'amortisseur (72) qui comporte des fentes ou trous (71) et un alésage central (74).

23. Amortisseur de suspension selon la revendication 22, caractérisé en ce que le tiroir (75) est réalisé équilibré en pression et est couplé à un second tiroir (76), non équilibré en pression, qui est guidé sur la partie de valve d'amortisseur (72) et coopère avec des fentes ou trous (98) ménagés dans cette partie de valve d'amortisseur (72).

24. Amortisseur de suspension selon la revendication 23, caractérisé en ce que le premier tiroir (75) est formé par le porte-bobine de la bobine mobile (26).

25. Amortisseur de suspension selon la revendication 19, caractérisé en ce que le boîtier de valve (34) est réalisé en deux parties et est formé du premier corps de valve (36) et d'une partie de guidage (14), tandis que l'étage principal (12) est formé d'un tiroir principal (16) coopérant avec une arête de commande (15) ménagée sur la partie de guidage (14) et que l'étage pilote (11) est formé d'un tiroir de commande (18) coopérant avec des trous de commande (17) ménagés dans le tiroir principal (16).

26. Amortisseur de suspension selon la revendication 25, caractérisé en ce que l'arête de commande (15) est disposée dans la zone de trous de sortie d'écoulement (19) qui sont ménagés dans la partie de guidage (14) et communiquent avec la chambre d'équilibrage (8).

27. Amortisseur de suspension selon la revendication 26, caractérisé en ce que le tiroir principal (16) est réalisé de façon à être ouvert dans sa partie supérieure et est pourvu de trous (20) qui sont agencés de façon à pouvoir être amenés en communication avec les trous de sortie d'écoulement (19).

28. Amortisseur de suspension selon l'une des revendications 25 à 27, caractérisé en ce que le tiroir principal (16) est soumis à une précontrainte dans le sens de la fermeture de l'étage principal (12) au moyen d'un premier ressort de compression (21) et prend appui sur le premier corps de valve (36).

29. Amortisseur de suspension selon la revendication 28, caractérisé en ce que l'appui du tiroir principal (16) sur le premier corps de valve (36) s'effectue au moyen de parties en saillie axiales (22).

30. Amortisseur de suspension selon l'une des revendications 25 à 29, caractérisé en ce que le tiroir principal (16) est pourvu de trous d'étranglement (23) qui débouchent d'une part dans la zone des trous (20) et d'autre part dans une chambre hydraulique (24) délimitée dans la partie de guidage (14) par le tiroir principal (16).

31. Amortisseur de suspension selon la revendication 25, caractérisé en ce que le tiroir de commande (18) est guidé dans le tiroir principal (16) et, à l'état de repos, prend appui sur ce tiroir principal (16) sous l'effet de la précontrainte d'un second ressort de compression (25).

32. Amortisseur de suspension selon la revendication 20 et 25, caractérisé en ce que le tiroir de commande (18) est fixé sur le porte-bobine mobile (27) au moyen d'un élément de fixation (28) dont la tête (29), à l'état de repos, prend appui sur le tiroir principal (16).

33. Amortisseur de suspension selon la revendication 32, caractérisé en ce que le convertisseur électromécanique (70) formé de la bobine mobile (26) et de l'aimant permanent (30) est disposé dans une chambre hydraulique (31) communiquant avec la chambre d'équilibrage (8), de sorte que l'extrémité de l'élément de fixation (28) qui est fixée au porte-bobine mobile (27) est soumise à l'action de la pression régnant dans la chambre d'équilibrage (8).

34. Amortisseur de suspension selon l'une des revendications précédentes, caractérisé en ce que le tube (6) est disposé sur le cylindre de travail (1) de façon à pouvoir être déplacé en translation axiale ou de façon à pouvoir être déplacé en rotation.

35. Amortisseur de suspension selon l'une des revendications précédentes, caractérisé en ce qu'un interrupteur (77) à commande par écoulement est interposé entre la seconde chambre de travail (5) et la chambre d'équilibrage (8).

36. Amortisseur de suspension selon l'une des revendications précédentes, caractérisé en ce qu'il est prévu un capteur de course (78) qui détecte la course du piston.

37. Amortisseur de suspension selon la revendication 36, caractérisé en ce que le capteur de course (78) est formé d'une tube (79), de préférence un tube en aluminium, qui pénètre dans la tige de piston (2), est guidé d'une manière étanche dans le piston (3) et fait partiellement saillie hors de la tige de piston (2) dans la zone du piston, ainsi que d'un noyau (80) disposé de manière à être mobile à l'intérieur du tube (79).

38. Amortiseur de suspension selon la revendication 37, caractérisé en ce qu'à son extrémité en saillie, le tube (79) est fixé dans la zone du groupe structurel de valves, tandis que le noyau (80) est fixé à la tige de piston (2).

39. Amortisseur de suspension selon la revendication 37, caractérisé en ce que le tube (81) est disposé à l'intérieur de la tige de piston (2), tandis que le noyau (82) est guidé d'une manière étanche dans le tube (81) et est fixé au fond du boîtier de valve (55).

40. Amortisseur de suspension selon la revendication 37, caractérisé en ce que la tige de piston (2) comporte des moyens qui permettent une mise à l'atmosphère de sa cavité.

41. Amortisseur de suspension selon la revendication 39 et 40, caractérisé en ce que le noyau (82) délimite dans le tube (81) une chambre (83) qui, par l'intermédiaire d'une troisième valve antiretour (84), communique avec des conduits de mise à l'atmosphère (85, 86, 87) débouchant dans la première chambre de travail (4).

42. Amortisseur de suspension selon la revendication 41, caractérisé en ce qu'un filtre (88) est disposé en amont de la troisième valve antiretour (84).

43. Amortisseur de suspension selon la revendication 42, caractérisé en ce que la troisième valve antiretour (84) et le filtre (88) sont disposés dans un bouchon fileté (89) qui obture la tige de piston (2).

44. Amortisseur de suspension selon la revendication 41, caractérisé en ce que le noyau (82) est réalisé en forme de tube dans sa partie supérieure et délimite avec le tube (81) une chambre annulaire (90) qui communique avec la seconde chambre de travail (5) et qui peut être amenée en communicattion avec la chambre (83) par l'intermédiaire d'une quatrième valve antiretour (91).

45. Amortisseur de suspension selon la revendication 44, caractérisé en ce que la quatrième valve antiretour (91) est formée d'un tiroir de valve (92) qui est guidé sur le noyau (82) en étant soumis à une précontrainte élastique et qui coopère avec des ouvertures (92) ménagées dans le noyau (82).

46. Amortisseur de suspension selon la revendication 45, caractérisé en ce que la chambre (83) est agencée de façon à pouvoir être amenée en communication avec la chambre annulaire (90) par l'intermédiaire d'une valve de limitation de pression (94).

47. Amortisseur de suspension selon la revendication 46, caractérisé en ce que la valve de limitation de pression (94) est formée d'un piston de valve (95) qui est guidé d'une manière étanche dans le noyau (82) et est soumis à une précontrainte élastique et qui coopère avec des ouvertures (trous) (96) ménagés dans le noyau (82).

48. Amortisseur de suspension selon l'une des revendications précédentes, caractérisé en ce que le piston (3) comporte une cinquième valve antiretour (97) qui, lors d'une augmentation de pression dans la seconde chambre de travail (5), permet une communication entre les deux chambres de travail (4, 5).
